(19) Europäisches Patentamt
European Patent Office
Office européen des brevets

(11) **EP 2 917 895 B1**

(12) **EUROPEAN PATENT SPECIFICATION**

(45) Date of publication and mention
of the grant of the patent:
**03.10.2018  Bulletin 2018/40**

(51) Int Cl.:
***G06T 7/80*** *(2017.01)*

(21) Application number: **13792635.8**

(22) Date of filing: **11.11.2013**

(86) International application number:
**PCT/EP2013/073519**

(87) International publication number:
**WO 2014/072511 (15.05.2014 Gazette 2014/20)**

(54) **DETERMINATION OF RECTIFYING HOMOGRAPHIES FOR A CAMERA ARRAY**

BESTIMMUNG VON GLEICHRICHTUNGSHOMOGRAFIEN FÜR EINE KAMERAANORDNUNG

DÉTERMINATION DES HOMOGRAPHIES DE RECTIFICATION POUR UN RÉSEAU DE CAMÉRAS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.11.2012  US 201261724687 P**

(43) Date of publication of application:
**16.09.2015  Bulletin 2015/38**

(73) Proprietor: **Fraunhofer-Gesellschaft zur Förderung der angewandten Forschung e.V.
80686 München (DE)**

(72) Inventors:
 • **ZILLY, Frederik
  70327 Stuttgart (DE)**
 • **RIECHERT, Christian
  10587 Berlin (DE)**
 • **MÜLLER, Marcus
  10587 Berlin (DE)**
 • **WAIZENEGGER, Wolfgang
  10997 Berlin (DE)**
 • **KAUFF, Peter
  14197 Berlin (DE)**

(74) Representative: **Schenk, Markus et al
Schoppe, Zimmermann, Stöckeler
Zinkler, Schenk & Partner mbB
Patentanwälte
Radlkoferstrasse 2
81373 München (DE)**

(56) References cited:
**US-A- 5 821 943**

 • **"Trifocal Tensor ED - HARTLEY R; ZISSERMAN A", 1 January 2004 (2004-01-01), MULTIPLE VIEW GEOMETRY IN COMPUTER VISION, CAMBRIDGE : CAMBRIDGE UNIVERSITY PRESS, GB, PAGE(S) 365 - 390, XP007916655, ISBN: 978-0-521-54051-3 pages 365-390, cited in the application page 376, paragraph 15.2 - page 378, line 14 page 381, line 1 - page 384, line 10 page 385, paragraph 15.4.1 - page 386, paragraph 15.4.2**
 • **P.H.S TORR ET AL: "Robust parameterization and computation of the trifocal tensor", IMAGE AND VISION COMPUTING, vol. 15, no. 8, 1 August 1997 (1997-08-01) , pages 591-605, XP055101416, ISSN: 0262-8856, DOI: 10.1016/S0262-8856(97)00010-3**

**Description**

The present application relates to the determination of rectifying homographies for a camera array.

Multi-camera systems such as linear camera arrays are commonly used to capture content for multi-base line stereo estimation, view generation for auto-stereoscopic displays, or similar tasks. However, even after a careful mechanical alignment, residual vertical disparities and horizontal disparity offsets impair further processing steps. In consequence, the multi-camera content needs to be rectified on a common base line.

Linear camera arrays have a long tradition in computer vision. A standard application is the generation of depth maps which can be estimated in a more precise and robust way than by using a stereo vision system only. A prominent example is the Multi-base line stereo approach proposed in [13] where disparities measured between different camera pairs on the same base line are mapped into an inverse-of-a-distance measure, to allow comparing and merging them. One crucial prerequisite of this approach is the absence of all vertical disparities among all camera images, and, that all horizontal disparities are proportional to each other, the proportionality factor being the ratio of the camera base lines. In the following, we will refer to the first requirement as vertical alignment, while calling the latter the horizontal alignment. Consequently, the aim of a multi-camera rectification algorithm is to ensure that these requirements are met.

Several trifocal or trinocular rectification algorithms are known in the literature. Trinocular rectification techniques which require calibrated cameras or dedicated calibration pattern have been proposed in [1,2,4,5,9]. In contrast, the method proposed by [15] works with uncalibrated cameras by using the trilinear tensor in its representation used in [14]. Other calibration-free approaches for trifocal rectification were proposed in [8,3,17]. However, these techniques target L-shaped trifocal setups rather than linear-cameras arrays. A rectification method for three cameras in a horizontal setup using uncalibrated cameras has been proposed by [10] and extended towards four or more cameras by [16]. Both methods are based on [11]. Recently, Nozick extended [4] towards uncalibrated cameras [12]. A simple, though real-time capable multi-camera rectification algorithm which considers only vertical pixel shifting has been proposed in [7]. Apart from [16] which applies also a simple horizontal pixel shifting to achieve equidistant disparities, there is a lack of other algorithms which target horizontal alignment and use uncalibrated cameras in a linear array. However, parallel epipolar lines are not a sufficient constraint for a proper horizontal alignment, as a stretching or offset of the horizontal disparities can still occur due to a horizontal shift of the principal point or a deviation of the pixel aspect ratio from 1.

US5821943 describes a method for generating information regarding a 3D object from at least one 2D projection thereof, the method comprising providing at least one 2D projection of a 3D object, generating an array of numbers described by $\alpha_{ijk}=v_i'b_{jk}-v_i''a_{ik}$($i,j,k$=1,2,3), where $a_{ij}$ and $b_{jk}$ are elements of matrices A and B respectively and $v_i$' and $v_i$" are elements of vectors $v_i$' and $v_i$" respectively, wherein the matrices and vectors together describe camera parameters of three views of the 3D object and employing the array to generate information regarding the 3D object.

Thus, it is the object of the present invention to provide a concept for determining rectifying homographies for a camera array which allows for a more efficient and/or easier rectification of the camera arrays.

This object is achieved by the subject matter of the pending independent claims.

In accordance with an embodiment, an apparatus for determining rectifying homographies for a linear camera array to be arranged along a common base line and the co-oriented in accordance with an embodiment of the present invention is configured to provide feature point triplets in three images of a scene captured by three cameras of the linear camera array; using positions $(u, v)$, $(u',v')$, $(u'',v'')$ of the feature point triplets, form, per feature point triplet, a linear equation of type $A\vec{x} = \vec{b}$, where $\vec{x}$ is a vector the components $x_i$ of which comprise geometric parameters, and **A** is a matrix and $\vec{b}$ is a vector, both dependent on the positions $(u, v)$, $(u',v')$, $(u'',v'')$ of the respective feature point triplet such that $A\vec{x} = \vec{b}$ is rewriteable into

$$\begin{bmatrix} u' \\ v' \\ 1 \end{bmatrix}_{\times} (u\mathcal{T}_1 + v\mathcal{T}_2 + \mathcal{T}_3) \begin{bmatrix} u'' \\ v'' \\ 1 \end{bmatrix}_{\times} = 0_{3\times 3} ,$$

where $\mathcal{T}_1, \mathcal{T}_2, \mathcal{T}_3$ are correlation slices of a trifocal tensor the elements $\mathcal{T}_i^{jk}$ of which relate to projection matrices P, $P' = \begin{bmatrix} a_i^j \end{bmatrix}$, $P'' = \begin{bmatrix} b_i^j \end{bmatrix}$ describing the projections of a first, second and third of the three cameras, respectively, wherein P , P' and P'' are of the form $P = KR[1|-C]$, $P' = K'R'[1| - C']$ and $P'' = K''R''[1|-C'']$, where K, K', K'' are intrinsic matrices, R, R', R'' are rotation matrices and C, C', C'' are 3D vectors pointing to the camera centers of the three cameras, and being equal to each other in two dimensions other than the common base line (14), and $K = \begin{bmatrix} f & 0 & 0 \\ 0 & f & 0 \\ 0 & 0 & 1 \end{bmatrix}$ and $R=1$;

and determine (38) values for the components $x_i$ which solve $A\vec{x} = \vec{b}$ for the feature point triplets; and derive (40) homography matrices H' and H'' for the second and third cameras (10b, 10c) using the determined values for $x_1$.

The application is based on the finding that it is feasible to linearize a trifocal tensor in such a manner that the determination of rectifying homographies for a linear camera array may be simplified in such a manner that merely the solving of a linear equation system $A\vec{x} = \vec{b}$ is necessary, which, in turn, is rewritable into above trifocal tensor equation concerning feature point triplets. In even other words, the present application relies on the finding that it is feasible to effectively exploit the trifocal constraint for rectifying a linear camera array of three cameras by simplifying the trifocal tensor by linearization in such a manner that the remaining problem to be solved may be formulated as the linear problem of $A\vec{x} = \vec{b}$.

Advantageous implementations are the subject of the pending dependent claims. Beyond that, preferred embodiments of the present application are described below with respect to the figures among which:

Fig. 1     shows a schematic diagram illustrating an optimum state of a linear camera array for illustration purposes, i.e. a state which is virtually assumed by a real camera set up by way of the embodiments of the present application in accordance with an embodiment;

Fig. 2     illustrates a schematic block diagram of an apparatus for determining rectifying homographies for a linear camera array according to Fig. 1 in accordance with an embodiment;

Fig. 3     shows a schematic process flow of an iterative enhancement of the rectifying homography determination in accordance with an embodiment; and

Fig. 4-6     show test results of a specific rectifying homography determination implementation.

Against the background outlined in the introductory portion of the specification of the present application, a concept is outlined hereinafter which achieves vertical alignment, horizontal alignment, i.e. proportional horizontal disparities after rectification, and extracts this proportionality constant, i.e. the ratio of the camera base lines which do not need to be equidistant. In particular, the following description starts with the description of a specific embodiment in order to ease the understanding of the more generalized embodiments described thereinafter. The main properties of the detailed embodiment outlined now are:

- Based on feature point triplets,
- Suitable for uncalibrated cameras,
- Elimination of vertical disparities,
- Horizontal disparities become proportional to the ratio of the two camera base lines,
- Provision of the proportionality constant $\beta$,
- Linear estimation of the trifocal tensor,
- Robust against noise and outliers.

The rectification technique described now is based on estimating the trifocal tensor which has been developed in a Taylor serie around the ideal state of perfectly aligned cameras.

The basic concept of the linearization of the trifocal tensor is a Taylor expansion of the tensor around a known state, which is in the present example a camera configuration of a perfectly aligned linear camera array. The linearization approach similar to [18] allows to compute the trifocal tensor by solving a linear set of equations. More importantly, once the result vector, i.e. the set of geometric parameters is known, it provides for a direct access not only to the components of the trifocal tensor but also to the underlying geometry. These parameters can directly be used for the composition of rectifying homographies, to retrieve the camera pose, to perform a trifocal point transfer or obviously to compose the trifocal tensor itself.

We will now describe the linearization process itself. The Taylor expansion of a function $f(x,y)$ around the point $(0,0)$ is given by

$$f(x,y) = f(0,0) + x\frac{\partial f}{\partial x}(0,0) + y\frac{\partial f}{\partial y}(0,0) + \cdots \qquad (1)$$

where all terms of second or higher order have been omitted. The linearized result is the sum of the function at a known point (e.g. the rectified state) and the partial derivatives at this point multiplied by the deviation from the known state. In a similar way, a rotation matrix can be expressed as a function of three variables, i.e. the angles $\alpha_x$ $\alpha_y$, and $\alpha_z$. To clarify the linearization approach, we perform the calculation of the first order Taylor expansion of the rotation matrices explicitly. Subsequently, we will compute the projection matrices and the trifocal tensor.

The rotation matrix $R$ $(\alpha_x$ $\alpha_y$, $\alpha_z)$ is a 3x3 matrix which is composed by trigonometric functions. However, we can assume that all angels $\alpha_x$ $\alpha_y$, and $\alpha_z$ are small as we are near the rectified state:

$$R(\alpha_x, \alpha_y, \alpha_z) \approx \begin{bmatrix} 1 & 0 & 0 \\ 0 & 1 & 0 \\ 0 & 0 & 1 \end{bmatrix} + \alpha_x \begin{bmatrix} 0 & 0 & 0 \\ 0 & 0 & -1 \\ 0 & 1 & 0 \end{bmatrix}$$
$$+ \alpha_y \begin{bmatrix} 0 & 0 & 1 \\ 0 & 0 & 0 \\ -1 & 0 & 0 \end{bmatrix} + \alpha_z \begin{bmatrix} 0 & -1 & 0 \\ 1 & 0 & 0 \\ 0 & 0 & 0 \end{bmatrix} = \begin{bmatrix} 1 & -\alpha_z & \alpha_y \\ \alpha_z & 1 & -\alpha_x \\ -\alpha_y & \alpha_x & 1 \end{bmatrix} \quad (2)$$

We will now use this result to calculate the linearized projection matrix.

$$P = KR [I| - C] \qquad (3)$$

We will first present the set of three intrinsic matrices $K, K'$, and $K''$ for the first, second, and third camera respectively. We assume that the focal lengths are similar and vary only by a small amount. The first camera shall be our reference camera. Assuming a centered origin, we get

$$K = \begin{bmatrix} f & 0 & 0 \\ 0 & f & 0 \\ 0 & 0 & 1 \end{bmatrix} \qquad (4)$$

In our case, the absolute focal length $f$ has little influence which allows us to approximate it [12] with $f = \sqrt{w^2 + h^2}$, where w and h are the image width and height respectively. We can now normalize $K$, i.e. the reference camera's intrinsic matrix is the identity matrix $I$. The focal length of the second camera differs by a factor $1 + \alpha'_f$ from the reference camera where $\alpha'_f$ is small, i.e. second order terms can be neglected during linearization. The third camera is affected by a small horizontal shift of the principal point $p''_x$, a small offset $\alpha''_f$ of the aspect ratio from isotropy. These parameters ensure an optimal horizontal alignment of the rectified cameras.

$$K'(\alpha'_f) = \begin{bmatrix} (1 + \alpha'_f) & 0 & 0 \\ 0 & (1 + \alpha'_f) & 0 \\ 0 & 0 & 1 \end{bmatrix}$$
$$K''(\alpha''_f, \alpha''_r, p''_x) = \begin{bmatrix} (1 + \alpha''_f)(1 + \alpha''_r) & 0 & p''_x \\ 0 & (1 + \alpha''_f) & 0 \\ 0 & 0 & 1 \end{bmatrix} \quad (5)$$

As the first camera is the reference camera, its center C=(0,0,0) coincides with the origin. The second and third cameras lie on a common base line, its centers are $C' = (c'_x, 0,0)$ and $C'' = (c''_x, 0,0)$ respectively. Please note that we have neglected translations of the cameras centers along the y-axis and the z-axis. The projection matrix for the first camera is $P = [I/0]$, Given the camera centers $C'$ and $C''$ we get for the second and third cameras by inserting eqns. (5) and (2) into eq. (3) the projection matrices *P'* and *P''*:

$$P' = \begin{bmatrix} \alpha'_f + 1 & -\alpha'_z & \alpha'_y & -c'_x(\alpha'_f + 1) \\ \alpha'_z & \alpha'_f + 1 & -\alpha'_x & -c'_x\alpha'_z \\ -\alpha'_y & \alpha'_x & 1 & c'_x\alpha'_y \end{bmatrix}$$

$$P'' = \begin{bmatrix} \alpha''_f + \alpha''_r + 1 & -\alpha''_z & \alpha''_y + p''_x & -c''_x(\alpha''_f + \alpha''_r + 1) \\ \alpha''_z & \alpha''_f + 1 & -\alpha''_x & -c''_x\alpha''_z \\ -\alpha''_y & \alpha''_x & 1 & c''_x\alpha''_y \end{bmatrix} \quad (6)$$

Given the projection matrices, we can now perform a calculation of the trifocal tensor using eqns. (7,8) [6],

$$\mathcal{T}_i^{jk} = a_i^j b_4^k - a_4^j b_i^k \quad (7)$$

$$P' = [a_i^j], P'' = [b_i^j] \quad (8)$$

where $a_i^j$ and $b_i^j$ represent the elements in the $i$th column and $j$th row of the projection matrix *P'* and *P''* respectively. To increase the readability we substitute $\Delta c_x = (c'_x - c''_x)$. We can now present the trifocal tensor in slices representation:

$$\mathcal{T}_1 = \begin{bmatrix} (1 + \alpha'_f + \alpha''_f + \alpha''_r)\Delta c_x & \alpha''_z \Delta c_x & -\alpha''_y \Delta c_x \\ \alpha'_z \Delta c_x + c'_y & 0 & 0 \\ -\alpha'_y \Delta c_x + c'_z & 0 & 0 \end{bmatrix}$$

$$\mathcal{T}_2 = \begin{bmatrix} -\alpha''_z c'_x + \alpha'_z c''_x & (1 + \alpha'_f + \alpha''_f)c'_x & \alpha''_x c'_x \\ -(1 + \alpha'_f + \alpha''_f + \alpha''_r)c''_x & \alpha'_z c'_x - \alpha''_z c''_x & \alpha''_y c'_x \\ -\alpha'_x c''_x & -\alpha'_y c'_x & 0 \end{bmatrix} \quad (9)$$

$$\mathcal{T}_3 = \begin{bmatrix} (\alpha''_y + p''_x)c'_x - \alpha'_y c''_x & -\alpha''_x c'_x & (1 + \alpha'_f)c'_x \\ \alpha'_x c''_x & 0 & \alpha'_z c'_x \\ -(1 + \alpha''_f + \alpha''_r)c''_x & -\alpha''_z c''_x & -\alpha'_y c'_x + \alpha''_y c''_x \end{bmatrix}$$

Given a set of triplet point matches, we do now aim to find the unknown variables numerically. Special attention is needed to estimate the components $c'_x$ and $c''_x$. In fact, all we need for a multi-base line stereo approach is the ratio of the base lines between the three cameras. In consequence, we can normalize the base line between the first and second camera to $\beta_{12}=1$ and concentrate on the estimation of the relative size of the base line between first and third camera $\beta_{13} = c''_x / c'_x$ and $\beta_{13} = \beta_{12} + \beta_{23}$. Given the trifocal tensor in slices representation and a set of triplet point matches [*u,v,u',v',u'',v''*] we get a set of nine equations:

$$\begin{bmatrix} u' \\ v' \\ 1 \end{bmatrix}_\times (u\mathcal{T}_1 + v\mathcal{T}_2 + \mathcal{T}_3) \begin{bmatrix} u'' \\ v'' \\ 1 \end{bmatrix}_\times = 0_{3\times3} \quad (10)$$

Each point triplet gives rise to nine equations wherefrom four are linear independent [6,14]. As an example we present the equation corresponding to the 2nd row and column of Eq. (10):

$$
\begin{aligned}
(u - u')\alpha_b &+ (\beta_{23}u + u'')\alpha_f' + (\beta_{23}u - \beta_{13}u')\alpha_f'' \\
&+ (\beta_{23}u - \beta_{13}u')\alpha_r'' - (\beta_{13}u'v)\alpha_x' + (u''v)\alpha_x'' \\
&+ (\beta_{23}uu' + u'u'' + \beta_{13})\alpha_y' \\
&+ (\beta_{23}u\,u'' - \beta_{13}u'u'' - 1)\alpha_y'' - (\beta_{13}v)\alpha_z' + v\,\alpha_z'' - p_x'' \\
&+ \beta_{23}u - \beta_{13}u' + u'' = 0
\end{aligned}
\tag{11}
$$

We can group the coefficients to formulate a constraint matrix $A$ forming a linear set of equations which allows us to find the vector $\vec{x}$ of geometric parameters:

$$
\vec{x} = [\alpha_b, \alpha_f', \alpha_x', \alpha_y', \alpha_z', \alpha_f'', \alpha_r'', \alpha_x'', \alpha_y'', \alpha_z'', p_x'']
\tag{12}
$$

The matrix $A$ consists of eleven columns and nine rows per point triplet. The terms of the equation which do not depend on a variable can be grouped on the right side of the equation forming the vector $\vec{b}$. Finally we can solve the linear set of equations by QR-factorization.

$$
A\vec{x} = \vec{b}
\tag{13}
$$

The base line ratios $\beta_{23}$ and $\beta_{13}$ can't be estimated linearly in a single step as they form products with other variables. Consequently, they need to be estimated iteratively. Given a start value for $\beta_{13} = \beta_{12}$ we adjust its value with each iteration by adding a correction value $\alpha_b$ which we introduce into eqn. (11), by setting $c_x''/c_x' = \beta_{13} + \alpha_b$.

The rectifying homographies are composed using the geometric parameters obtained in eqns. (10-13). The homographies shall transform the projection matrices $p'$ and $p''$ such that they have the same orientation and intrinsic parameters as the reference camera $p$. Thus, given the matrices

$$
P' = K'R'[I|-C_x'],\ P'' = K''R''\,[I|-C_x'']
\tag{14}
$$

We can formulate the following homographies $H'$ and $H''$ using eqns. (4) and (5).

$$
\begin{aligned}
H' &= KR'\big(\alpha_x', \alpha_y', \alpha_z'\big)^{-1}K'\big(\alpha_f'\big)^{-1} \\
H'' &= KR''\big(\alpha_x'', \alpha_y'', \alpha_z''\big)^{-1}K''\big(\alpha_f'', \alpha_r'', p_x''\big)^{-1}
\end{aligned}
\tag{15}
$$

where $R'\big(\alpha_x', \alpha_y', \alpha_z'\big)$ and $R'\big(\alpha_x', \alpha_y', \alpha_z'\big)$ denote rotation matrices around the x-, y-, and z-axis respectively. Please note that the standard trigonometric functions are used and not a linearized version. After applying the homographies, the projection matrices have the desired simplified form corresponding to an ideal linear camera array:

$$
H'P' = \begin{bmatrix} 1 & 0 & 0 & c_x' \\ 0 & 1 & 0 & 0 \\ 0 & 0 & 1 & 0 \end{bmatrix},\ H''P'' = \begin{bmatrix} 1 & 0 & 0 & c_x'' \\ 0 & 1 & 0 & 0 \\ 0 & 0 & 1 & 0 \end{bmatrix}
\tag{16}
$$

Please note that as the reference camera $p$ remains unchanged during the rectification process, i.e. it can serve as reference camera for multiple camera triplets within the linear camera array.

The precision of the geometric parameters can be improved by iterating the estimation process, i.e. the rectifying homographies are applied to the feature point triplets and a new Taylor expansion is performed. We iterate until no further improvement is achieved, i.e. if the back-projection error [6] for the resulting rectified projection matrices converges.

An algorithm for an Iterative Estimation of the Trifocal Tensor could be described by way of the following pseudo-code:

Input:      triplet matches $[u,v,u',v',u'',v'']$
Output:     Final geometric parameter vector $x_f$
            Base line ratios $\beta_{12}, \beta_{23}, \beta_{13}$
            Projection matrices $P'$ and $P''$
            Rectifying homographies $H'$ and $H''$

*Initialize parameter vector $x_f$ and base line ratios*

$$\boldsymbol{x}_f = \vec{0};\ \beta_{12} = 1;\ \beta_{13} = \beta_{12};\ \beta_{23} = 0;$$

$$\boldsymbol{m_0} = [u, v, u', v', u'', v''] ;\ \boldsymbol{m_i} = \boldsymbol{m_0};\ err_{bp} = max$$

do Iterate until back-projection error converges

do    Iterate until correction value $\alpha_b$ vanishes build new constraint matrix A and solve eq.(13) $[\boldsymbol{A,b}]$ = get_constraint_matrix($\boldsymbol{x}_f, \beta_{13}, \beta_{23}, \boldsymbol{m}_i$) $\boldsymbol{x}_i$= solve_linear_system (A,b)

$$\beta_{13} += \boldsymbol{x}_i ["\alpha_b"];\ \beta_{23} = \beta_{13} - \beta_{12}$$

until $|\boldsymbol{x}_i ["\alpha_b"]| < \in$
$\boldsymbol{x}_f += \boldsymbol{x}_i$; Add parameter vector from last iteration
Projection matrices according to eq. (14)
$[P',P''] = $ get_proj_matrices($\boldsymbol{x}_f$)
Homographies according to eq. (15)
$[H',H''] = $ get_homographies($\boldsymbol{x}_f$)
Apply homographies to feature points
$\boldsymbol{m}_i = $ get_rectified_points($\boldsymbol{m}_0, H', H''$)
Retrieve back-projection error after Rectification, eq. (16)
$\boldsymbol{err}_{old} = \boldsymbol{err}_{bp}$; $\boldsymbol{err}_{bp} = $back_proj_err ($\boldsymbol{m}_i$, $H'P'$, $H''P''$)

until $|\boldsymbol{err}_{bp} - \boldsymbol{err}_{old}| < \in$

Thus, before presenting the test results performed by applying the rectification concept outlined above, generalizing embodiments of the just-outlined concept are described hereinafter with respect to the figures. In particular, frankly speaking, the above derivation of the above-outlined rectification concept showed that it is feasible to linearize a trifocal tensor in such a manner that the determination of rectifying homographies for a linear camera array may be simplified in such a manner that merely the solving of a linear equation system according to equation 13 is necessary, which, in turn, is transferable into an equation 10. However, compared to the specific derivation applied above, several modifications are feasible as will be outlined below with respect to the more general embodiments.

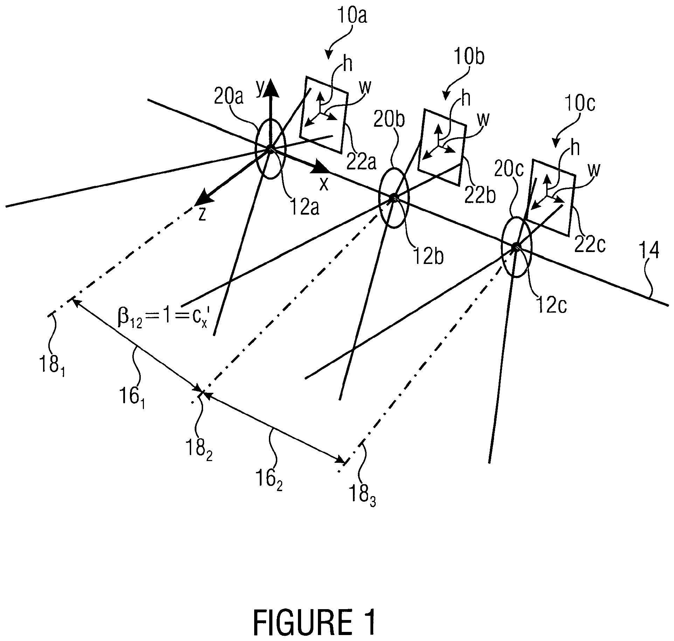

In particular, a generalization of the rectification concept presented above is described now with respect to the figures. Fig. 1, for example, illustrates a virtually rectified state of a linear camera array exemplarily consisting of three cameras. Fig. 1 illustrates the three cameras 10a, 10b and 10c and having their optical centers 12a, 12b and 12c arranged such that they lie on a common straight line, namely the common base line 14. Fig. 1 illustrates the optical centers 12a-12c to be positioned along common base line 14 equidistantly, i.e. with equal distances $16_1$ and $16_2$ there between, but the "optimum state" needs not to be restricted in this regard. Rather, the distance $16_1$ between right-channel camera 10a and mid-channel camera 10b may differ from the distance between the optical centers of camera 10b and left-channel camera 10c. The optical axes $18_1$, $18_2$ and $18_3$ of cameras 10a-10c extend in parallel to each other through the respective camera's optical center 12a-12c, respectively. In other words, the cameras 10a-10c are co-oriented.

Mechanically arranging a real camera setup of three cameras 10a-10c so that the latter assumes the optimum configuration shown in Fig. 1 is quite cumbersome. Accordingly, the concept described above and the embodiments described below help in alleviating the mechanical faults, i.e. lower the accuracy in mechanically arranging the camera setup. Rather, they enable to obtain a rectifying homography for the linear camera array enabling, in turn, to correct the pictures captured by two of the cameras in such a manner that the modified pictures correspond to pictures captured by virtual cameras positioned at the optimum positions shown in Fig. 1.

In the above presentation of a concrete concept example, one of the cameras was exemplarily used as a reference, i.e. its optical center defined the origin of the 3D world system with the axis x being collinear with the common base line 14 and the horizontal axis of the pictures captured by that reference camera, the axis z pointing along the reference camera's optical axis, and the axis y being perpendicular to axis x and z and pointing along the reference camera's vertical axis, respectively, thereby spanning an orthogonal 3D space system. This is illustrated in Fig. 1 exemplarily for camera 10a. That is, the above presented concept as well as the below-described generalizing embodiments, determine rectifying homographies H', H" for a linear camera array as illustrated in Fig. 1, in particular rectifying homographies for the two non-reference cameras 10b and 10c, so as to be arranged along the common base line 14 and be co-oriented to the reference camera 10a. To be more precise, the rectifying homographies H', H" are to virtually rectify the three cameras 10a-10c of the linear camera array to each other and to virtually rectify the two non-reference cameras 10b and 10c specifically, such that the three cameras 10a-10c are arranged along the common base line, i.e. have their optical/camera center 12a-12c on a straight line called the base line, i.e. along axis x, and such that same are co-oriented, i.e. have their optical axis $18_1$-$18_3$ parallel to each other. Moreover, the rectifying homographies not only correct any pan and tilt of the non-reference cameras with respect to the co-oriented state of their optical axis $18_2$ and $18_3$, respectively, but additionally correct for any roll of the latter cameras 10b and 10c so that, afterwards, the reference camera 12a and the virtual representatives of non-reference cameras 10b and 10c have their width direction w and their height direction h oriented parallel to each other.

In order to get the trifocal tensor linearized in such a manner that the rectification equation according to formulas 10 and 14 become linear and, accordingly, render the rectifying homograph determination easier, some assumptions have been made with respect to the effective degrees of freedom of the deviation of the cameras of the camera system with respect to the optimum position of Fig. 1. In particular, translations of the optical centers 12a-12c along axis y and z were neglected. That is, the cameras were assumed to be already positioned along the common base line 14. However, any tilt, roll and pan, i.e. any rotation of the cameras 10b and 10c around axis x, z and y, respectively, denoted as $\alpha_x$, $\alpha_z$ and $\alpha_y$ (with one or two apostrophes), is corrected by the rectifying homographies. Concurrently, focal lengths deviations of cameras 10b and 10c relative to reference camera 10a were expressed, and are corrected, by treating them as additive deviations and, in particular, as additive deviations measured, or normalized, in relation to reference cameras 10a focal length, i.e. $\alpha_f$ (with one and two apostrophes, respectively). Even further, an anisotropy or astigmatism of one of the two non-referenced cameras, such as camera 10c, may also be considered and corrected, expressed above using $\alpha_a$".

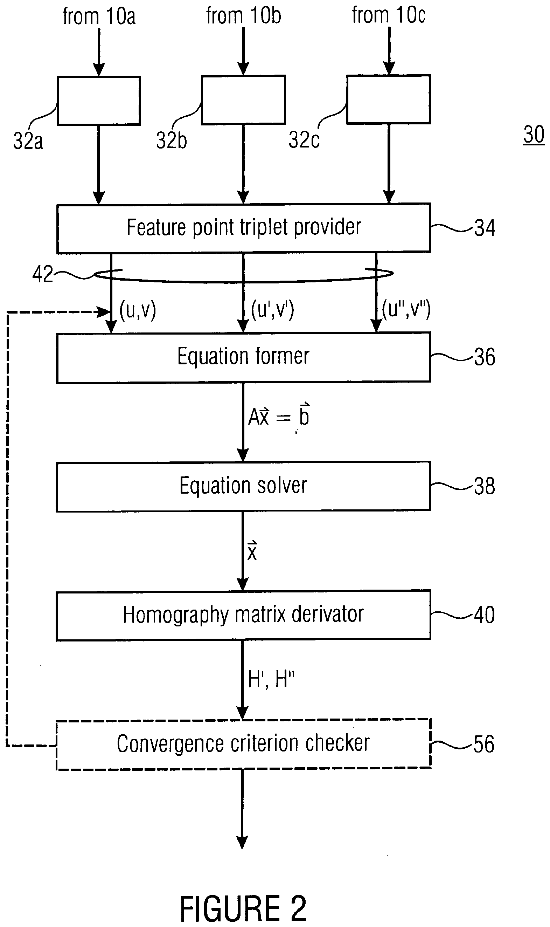

An apparatus for determining the rectifying homographies for the linear camera array of Fig. 1 in accordance with an embodiment is shown in Fig. 2. The apparatus, which is generally indicated using reference sign 30, receives pictures 32a, 32b and 32c captured by the cameras 10a-10c at their non-rectified positions. They all show one scene from their different positions and, possibly, non-parallel orientations and/or unequal focal lengths.

The apparatus of Fig. 2 comprises a feature point triplet provider 34, an equation former 36, an equation solver 38 and a homography matrix derivator 14 which are connected in series to each other in the order of their mentioning.

Firstly, within feature point triplet provider 34, feature point triplets 42 in the three images 32a-32c are determined/provided. That is, as all three images 32a-32c show the same scene captured by the three cameras 10a-10c of the linear camera array at their not yet having been virtually rectified state, feature point triplet provider 34 is able to locate, within each image 32a-32c, points corresponding to the same feature in the scene captured by images 32a-32c. The positions of these points within each image 32a-32c, is given by $(u,v)$ as far as the position within image 32a is concerned, i.e. the image 32a of the reference camera 10a $(u',v')$ as far as the corresponding point in image 32b is concerned, and $(u'',v'')$ as far as the corresponding point within image 32c is concerned. As just-mentioned, several such feature point triplets 42 may be provided/determined by feature point triplet provider 34. The provision/determination may involve the computation of correlations, for example. In the above pseudo code algorithm, the feature point triplet provision was denoted by "input: triplet point matches". That is, the provision may involve the actual identification of feature points in the images 32a-32c, i.e. points in the images which belong to the same point in the scene.

Then, using positions $(u,v)$, $(u',v')$, $(u'',v'')$ of the feature point triplets 42, in equation former 36, per feature point triplet 42, a linear equation of type $A\vec{x} = \vec{b}$ is determined (cp. "build new constraint matrix A in above pseudo-code algorithm), where $\vec{x}$ is a vector the components $x_l$, of which comprise geometric parameters such as the rotational parameters (rotations around common base line 14 and around transverse axis 18 and optical axis y crossing the common base line 14), focal length parameters (measured as additive deviation from focal length of the one camera 10a (first camera) for the other two cameras 10b,c (second and third)) and translatory parameters, and a shift of the principal point along the common base line of one of the two (the third camera) 10c and an isotropy deviation of the one10c of the two cameras 10v,c relative to the other ones, and A is a matrix and $\vec{b}$ is a vector, both independent from

$\vec{x}$ and dependent on the positions *(u,v)*, *(u',v')*, *(u'',v'')* of the respective feature point triplet such that $A\vec{x} = \vec{b}$ is

rewriteable into $\begin{bmatrix} u' \\ v' \\ 1 \end{bmatrix}_\times (u\mathcal{T}_1 + v\mathcal{T}_2 + \mathcal{T}_3) \begin{bmatrix} u'' \\ v'' \\ 1 \end{bmatrix}_\times = 0_{3\times3}$ where $\mathcal{T}_1, \mathcal{T}_2, \mathcal{T}_3$ are correlation slices of a trifocal tensor

the elements $\mathcal{T}_i^{jk}$ of which relate to projection matrices P, $P' = \left[a_i^j\right]$, $P'' = \left[b_i^j\right]$ describing the projections of a first, second and third of the three cameras, respectively, wherein *P , P' and P''* are of the form $P = KR[1|-C]$, $P' = K'R'[1|-C']$ and $P'' = K''R''[1 | - C'']$, where K, K', K'' are intrinsic matrices, R, R', R'' are rotation matrices and *C, C', C''* are 3D vectors pointing to the camera centers 12a-c of the three cameras 10a-c, and being equal to each other in two dimensions, namely exemplarily y and z in the above embodiments, the two dimensions being different from the common base line 14 which runs along axis x in the above embodiments although another possibility would be feasible as well,

and where $K = \begin{bmatrix} f & 0 & 0 \\ 0 & f & 0 \\ 0 & 0 & 1 \end{bmatrix}$ and R=1.

In the above, the components of $\vec{x}$ were $\alpha_b$, $\alpha_f''$, $\alpha_f'$, $\alpha_r''$, $\alpha_x'$, $\alpha_x''$, $\alpha_y'$, $\alpha_y''$, $\alpha_z'$, $\alpha_z''$, $p_x''$, namely - from left to right - an additive correction of the baseline distance of the non-reference cameras 10b,c, measured/normalized by the baseline distance between the reference camera 10a and a first non-reference camera 10b, two additive corrections of the focal lengths the two non-reference cameras 10b,c (second and third)), measured/normalized by the focal length of the reference camera 10a (first camera), an additive isotropy deviation (astigmatism) of the one 10c of the two non-reference cameras 10b,c (additive from one transversal axis' focal length to the other, perpendicular transversal axis' focal length), two tilt correction angles for the two non-reference cameras, two pan correction angles for the two non-reference cameras , two roll correction angles for the two non-reference cameras and a shift of the principal point along the common base line of one 10c of the two non reference cameras (the third camera) 10c.

Then, by equation solver 38, values for the components $x_i$ are determined (cp. "solve_linear_system" and inner do-until loop in above pseudo-code algorithm, respectively) which solve $A\vec{x} = \vec{b}$ for the feature point triplets, and homography matrices *H'* and *H''* for the second and third cameras are derived (cp. get_proj_matrices and equations 14, 15) using the determined values for $x_i$, by homography matrix derivator 40.

As explained above, the formation of $A\vec{x} = \vec{b}$ may be performed such that A and $\vec{b}$ are independent from $\vec{x}$, but dependent on a base line parameter, namely $\beta_{13}$, and such that the components $x_i$ of $\vec{x}$ consist of the geometric parameters and an additive correction value for the base line parameter, i.e. $\alpha_b$. The values for $x_i$ maybe determined iteratively with adjusting the base line parameter and solving $A\vec{x} = \vec{b}$ per iteration. Please see the inner do until loop in the above-outlined algorithm. The iterative determination of the values for $x_i$ may be performed until, or stopped, when a magnitude of the additive correction value $\alpha_b$ falls below a predetermined threshold, representatively indicated $\in$ in the above algorithm. The base line parameter may be set at the first iteration such that the second and third cameras have the same base line distance relative to the first camera. In the above algorithm, this was indicated by $\beta_{23} = \beta_{13}$.

In the above example, it was chosen to set the optical center's positions C = (0,0,0), $C' = (c_x', 0, 0)$, and $C'' = (c_x'', 0, 0)$. The base line parameter was defined dependent on $c''_x$ and $c'_x$. Further, the determination of $A\vec{x} = \vec{b}$ was done such that

$$P' = \begin{bmatrix} \alpha_f' + 1 & -\alpha_z' & \alpha_y' & -c_x'(\alpha_f' + 1) \\ \alpha_z' & \alpha_f' + 1 & -\alpha_x' & -c_x'\alpha_z' \\ -\alpha_y' & \alpha_x' & 1 & c_x'\alpha_y' \end{bmatrix}$$

with

$$R' = \begin{bmatrix} 1 & -\alpha'_z & \alpha'_y \\ \alpha'_z & 1 & -\alpha'_x \\ -\alpha'_y & \alpha'_x & 1 \end{bmatrix},$$

$$C' = (c'_x, 0, 0),$$

and

$$K'(\alpha'_f) = \begin{bmatrix} (1 + \alpha'_f) & 0 & 0 \\ 0 & (1 + \alpha'_f) & 0 \\ 0 & 0 & 1 \end{bmatrix},$$

and

$$P'' = \begin{bmatrix} \alpha''_f + \alpha''_r + 1 & -\alpha''_z & \alpha''_y + p''_x & -c''_x(\alpha''_f + \alpha''_r + 1) \\ \alpha''_z & \alpha''_f + 1 & -\alpha''_x & -c''_x \alpha''_z \\ -\alpha''_y & \alpha''_x & 1 & c''_x \alpha''_y \end{bmatrix}$$

with

$$R'' = \begin{bmatrix} 1 & -\alpha''_z & \alpha''_y \\ \alpha''_z & 1 & -\alpha''_x \\ -\alpha''_y & \alpha''_x & 1 \end{bmatrix},$$

$$C'' = (c''_x, 0, 0),$$

and

$$K''(\alpha''_f, \alpha''_r, p''_x) = \begin{bmatrix} (1 + \alpha''_f)(1 + \alpha''_r) & 0 & p''_x \\ 0 & (1 + \alpha''_f) & 0 \\ 0 & 0 & 1 \end{bmatrix},$$

so that

$$T_1 = \begin{bmatrix} (1 + \alpha'_f + \alpha''_f + \alpha''_r)\Delta c_x & \alpha''_z \Delta c_x & -\alpha''_y \Delta c_x \\ \alpha'_z \Delta c_x & 0 & 0 \\ -\alpha'_y \Delta c_x & 0 & 0 \end{bmatrix}$$

$$T_2 = \begin{bmatrix} -\alpha''_z c'_x + \alpha'_z c''_x & (1 + \alpha'_f + \alpha''_f)c'_x & \alpha''_x c'_x \\ -(1 + \alpha'_f + \alpha''_f + \alpha''_r)c''_x & \alpha'_z c'_x - \alpha''_z c''_x & \alpha''_y c'_x \\ -\alpha'_x c''_x & -\alpha'_y c'_x & 0 \end{bmatrix}$$

$$\mathcal{T}_3 = \begin{bmatrix} (\alpha_y'' + p_x'')c_x' - \alpha_y'c_x'' & -\alpha_x''c_x' & (1 + \alpha_f')c_x' \\ \alpha_x'c_x'' & 0 & \alpha_z'c_x' \\ -(1 + \alpha_f'' + \alpha_r'')c_x'' & -\alpha_z''c_x'' & -\alpha_y'c_x' + \alpha_y''c_x'' \end{bmatrix}$$

,

with the components $x_i$ of $\vec{x}$ being $\alpha_b$, $\alpha_f''$, $\alpha_f'$, $\alpha_r''$, $\alpha_x'$, $\alpha_x''$, $\alpha_y'$, $\alpha_y''$, $\alpha_z'$, $\alpha_z''$, $p_x''$ $\alpha_x''$, $\alpha_y'$, $\alpha_y''$, $\alpha_z'$, where

$\alpha_b$ is an additive correction value for the base line parameter and $\alpha_f''$, $\alpha_f'$, $\alpha_r''$, $\alpha_x'$, $\alpha_x''$, $\alpha_y'$, $\alpha_y''$, $\alpha_z'$, $\alpha_z''$, $p_x''$, are the geometric parameters, and the base line parameter is defined dependent on $c_x''$ and $c_x'$. As described above, the base line parameter may be a base line ratio, i.e. $\beta_{13}$. The derivation of the homography matrices $H'$ and $H''$ for the second and third cameras using the determined values for $x_i$ may be performed such that applying the homography matrices H' and H" to trigonometrical projection matrices $P'_{trig} = K' R_{trig}'[1 \,|\, -C']$ and $P''_{trig} = K'' R_{trig}''[1 \,|\, -C'']$ with

$$R'_{trig} = \begin{bmatrix} 1 + \cos\alpha_y' + \cos\alpha_z' & -\sin\alpha_z' & \sin\alpha_y' \\ \sin\alpha_z' & 1 + \cos\alpha_x' + \cos\alpha_z' & -\sin\alpha_x' \\ -\sin\alpha_y' & \sin\alpha_x' & 1 + \cos\alpha_x' + \cos\alpha_y' \end{bmatrix},$$

$$R''_{trig} = \begin{bmatrix} 1 + \cos\alpha_y'' + \cos\alpha_z'' & -\sin\alpha_z'' & \sin\alpha_y'' \\ \sin\alpha_z'' & 1 + \cos\alpha_x'' + \cos\alpha_z'' & -\sin\alpha_x'' \\ -\sin\alpha_y'' & \sin\alpha_x'' & 1 + \cos\alpha_x'' + \cos\alpha_y'' \end{bmatrix},$$

$$H'P'_{trig} = \begin{bmatrix} 1 & 0 & 0 & c_x' \\ 0 & 1 & 0 & 0 \\ 0 & 0 & 1 & 0 \end{bmatrix} \qquad H''P''_{trig} = \begin{bmatrix} 1 & 0 & 0 & c_x'' \\ 0 & 1 & 0 & 0 \\ 0 & 0 & 1 & 0 \end{bmatrix}$$

results in , and , respectively.

As described, $R'$ and $R''$ may be linearized for small variations of the rotation parameters, i.e. the components are linearly depend on rotation parameters of the geometric parameters. The derivation of the homography matrices $H'$ and $H''$ for the second and third cameras using the determined values for $x_i$ may be performed such that applying the homography matrices $H'$ and $H''$ to trigonometrical projection matrices $P' = K'R_{trig}'[1|-C']$ and $P'' = K''R_{trig}''[1|-C'']$ with $R_{trig}'$ and $R_{trig}''$ being dependent on the rotation parameters via trigonometric functions, result in ideal projection matrices corresponding to an ideal state of the linear camera array according to which the cameras of the linear camera array are arranged at the common base line axis and are co-oriented and have same intrinsic parameters.

As described above using the outer do-until loop, the determined values for the components $x_i$ may iteratively be enhanced by applying the homography matrices $H'$ and $H''$ to the positions of feature points of the feature point triplets within the second and third images, respectively, so as to obtain corrected positions; and performing the formation, determination and derivation anew using the corrected positions.

Iteratively enhancing the determined values for the components $x_i$ may be stopped by, prior to each iteration, reprojecting the feature point triplets at the corrected positions using the homography matrices $H'$ and $H''$ and checking as to whether the back-projections of the feature point triplets (cp. "get_proj_err") in above pseudo-code at the corrected positions fulfill a certain convergence criterion. For example, the criterion is met if the back-projected real points to which the corrected positions of cameras 2 and 3 are re-mapped, are scattered or distant from each other by an amount ($err_{bp}$) which is distinct from the scatter amount of the previous iteration ($err_{old}$) by less than a further predetermined threshold.

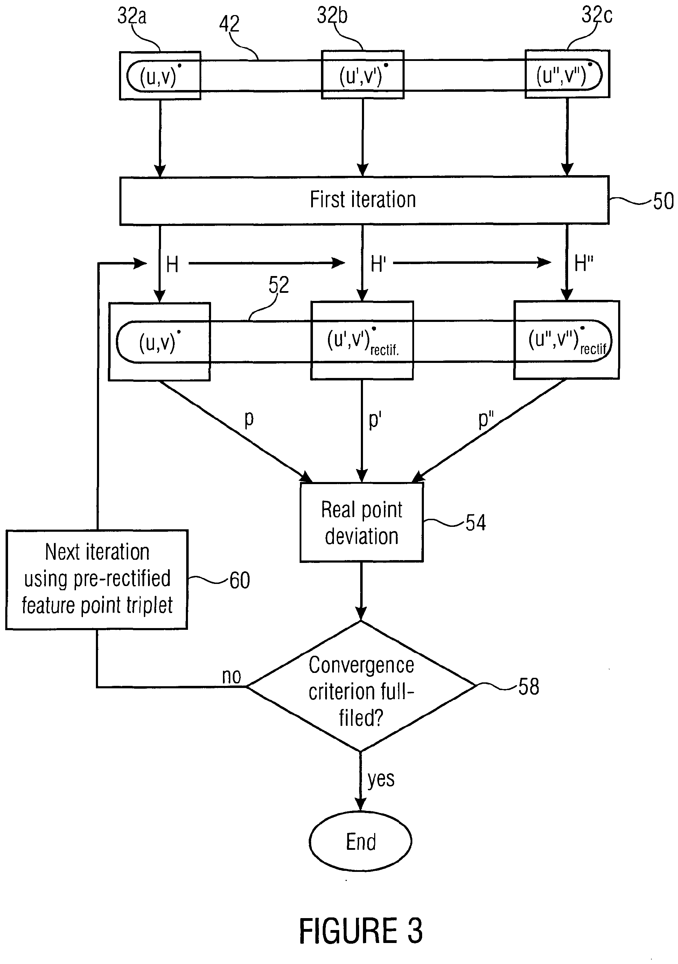

In order to illustrate the iterative way of determining the rectifying homographies, reference is made to Fig. 3. Fig. 3 shows schematically the original images 32a-32c and that they are subject to the first iteration 50 of rectifying homography determination as described with respect to Fig. 2, for example. As a result of the first iteration, homography matrices H' and H" are obtained, as described above. Using these matrices, collinearly rectified positions of the feature point triplet are obtained, as illustrated using reference sign 52 in Fig. 3, and using $\boldsymbol{m}_i$ in the above pseudo code. Using the projection matrices P, P' and P" as determined by vector $\vec{x}$ as derived in the first iteration 50, the real world point positions of the feature point triplet 52 may be determined, and in step 54 the deviation between these real world points, such as the mean distance from the center of gravity of these real world points, is determined. The determination in step 54 may be performed by the optional convergence criterion checker 56 in Fig. 2. The latter may then check in step 58 as to whether the deviation of the real world points determined fulfills some convergence criterion. For example, checker 56 checks as to whether the improvement in the real world point deviation by the current iteration compared to the immediately preceding iteration succeeds some predetermined threshold. In this regard, a predefined real world point deviation may be used as a comparison means for performing the check 58 in the first iteration. If the criterion is fulfilled, the rectifying homography matrices H' and H" determined suffice and need no further improvement. If not, the next iteration of rectifying homography determination is performed in step 60 - this time, however, using the pre-rectified feature point triplet 52, wherein this performance 60 is performed by equation former 36, equation solver 38 and homography matrix derivator 40.

Thus, the above concept and embodiments described herein use the trifocal tensor which represents the geometry between three cameras and hence is a helpful tool to calibrate a multi-camera system, and to derive rectifying homographies. Compared to the background described in the introductory portion of the specification of the present application, the above concept and embodiments, however, result in a more robust estimation of the trifocal tensor specialized for linear camera arrays and subsequent rectifying homography computation based on feature point triplets.

The above-presented concept which has been described prior to the description of the figures in form of the pseudo-code, has been tested and the results thereof are described hereinafter.

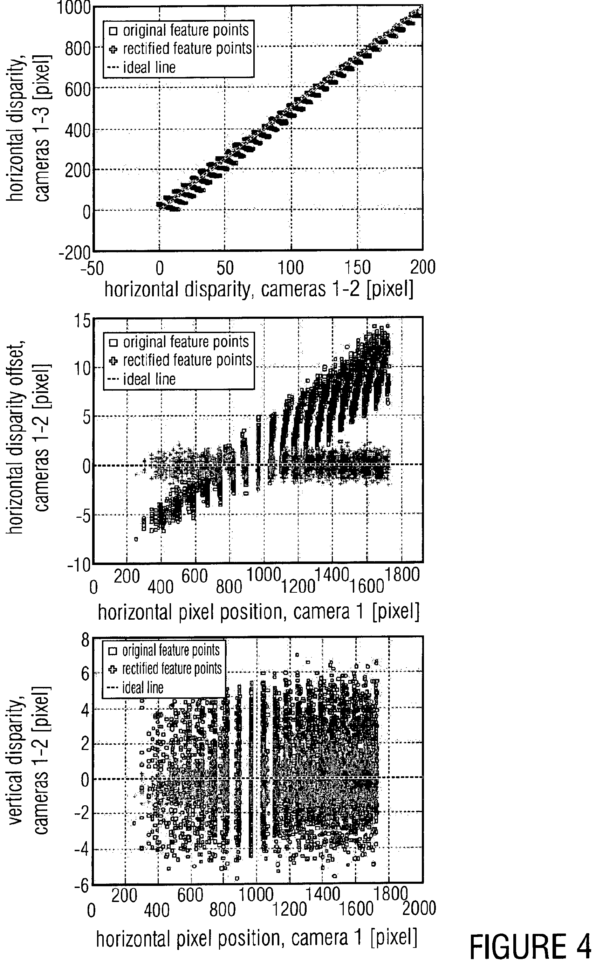

In a first experiment, the algorithm was tested using synthetic data. Varying noise amplitudes of the feature point positions and three different mechanical alignment qualities were simulated with subsequent analysis of the back-projection error and base line ratios. For each angle $\left(\alpha'_x, \alpha''_x, \alpha'_y, \alpha''_y, \alpha'_z, \alpha''_z\right)$ a deviation of 1° (5°) was used to simulate low (high) rotation errors. The intrinsic parameters $\left(\alpha''_f, \alpha'_f, \alpha''_r, p''_x\right)$ were set to $f/100$ ($5 \times f/100$) to simulate low (high) intrinsic errors. The camera centers were moved in $y$- and $z$-direction by 1% (5%) of the base line $c'_x$ c'$_x$ to simulate low (high) translational errors. As shown in Table 1, the resulting back-projection errors are in the range of the noise amplitude and increase with higher mechanical alignment errors. In Fig.4, we show the rectification quality of synthetic image data with a noise level $\sigma_n$ of 0.5 pixels and medium mechanical alignment quality.

Table 1. Back-projection error estimated for synthetic data with increasing noise level and alignment errors.

| Back-Proj. Error $_{err_{hn}}$/ Estimated Base line Ratio $\beta_{13}$ | | | |
|---|---|---|---|
| Noise level $\sigma_n$ (in pixel) | Mechanical Alignment Quality | | |
| | Good (low rot. & intrinsic errors.) | Med. (low rot., intr. & transl. err.) | Bad (high rot., intr. & transl. err.) |
| 0.0 | 0.000 / 5.000 | 0.311 / 5.000 | 1.554 / 4.989 |
| 0.1 | 0.086 / 5.000 | 0.331 / 5.000 | 1.558 / 4.989 |
| 0.2 | 0.172 / 5.000 | 0.371 / 4.999 | 1.571 / 4.989 |
| 0.5 | 0.431 / 4.999 | 0.548 / 4.998 | 1.646 / 4.988 |
| 1.0 | 0.864 / 4.996 | 0.924 / 4.994 | 1.846 / 4.987 |
| 2.0 | 1.733 / 4.983 | 1.765 / 4.981 | 2.439 / 4.970 |
| 5.0 | 4.370 / 4.892 | 4.382 / 4.902 | 4.768 / 4.869 |

In particular, Figure 4 shows an evaluation of the rectification quality for the multi-camera footage from Fig. 2. The back-projection error ($err_{bp}$ = 0.298) and the baseline ratios ($\beta_{12}$ = 1.0, $\beta_{23}$ = 4.004, and $\beta_{13}$ = 5.004) were determined according to the proposed algorithm for the linearized estimation of the trifocal tensor. Left: The horizontal disparities of the original feature points (red) are not proportional which is the case for the rectified points (green), which lie mainly on the ideal blue line. Center: The horizontal disparities of the original feature points (red) have a considerable offset from the ideal position, e.g. proportionality. After rectification (green points), the offset has been minimized. Right: The original feature points (red) show vertical disparities. After rectification, the vertical disparities have been minimized.

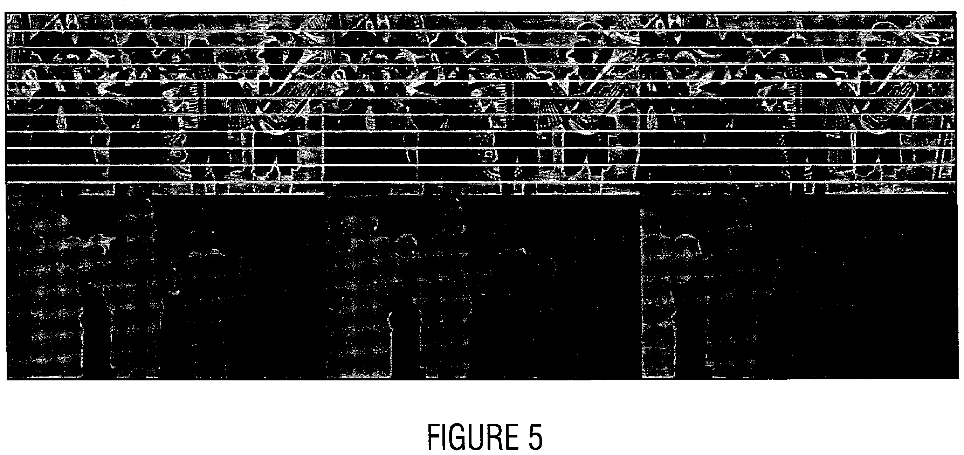

In a second experiment we used trinocular camera footage shot using three high quality HD cameras with a resolution of 1920×1080 pixels involving a narrow and a wide base line to test the proposed algorithm. Fig. 5 (top) shows a rectified image triplet along with horizontal lines demonstrating that corresponding pixels lie on the same image scan line. Moreover, the disparity maps in inverse-of-a-distance representation [13] in Fig. 5(bottom) demonstrate the quality of the horizontal alignment. I

That is, Fig. 5 shows a rectified multi-camera footage (*top*) along with normalized disparity maps (*bottom*). Horizontal reference lines illustrate that the vertical disparities vanished. The disparity maps were normalized using the base lines ratios $\beta_{12}$, $\beta_{23}$, and $\beta_{13}$ resulting in corresponding gray scale values for corresponding pixels despite non-equidistant base lines.

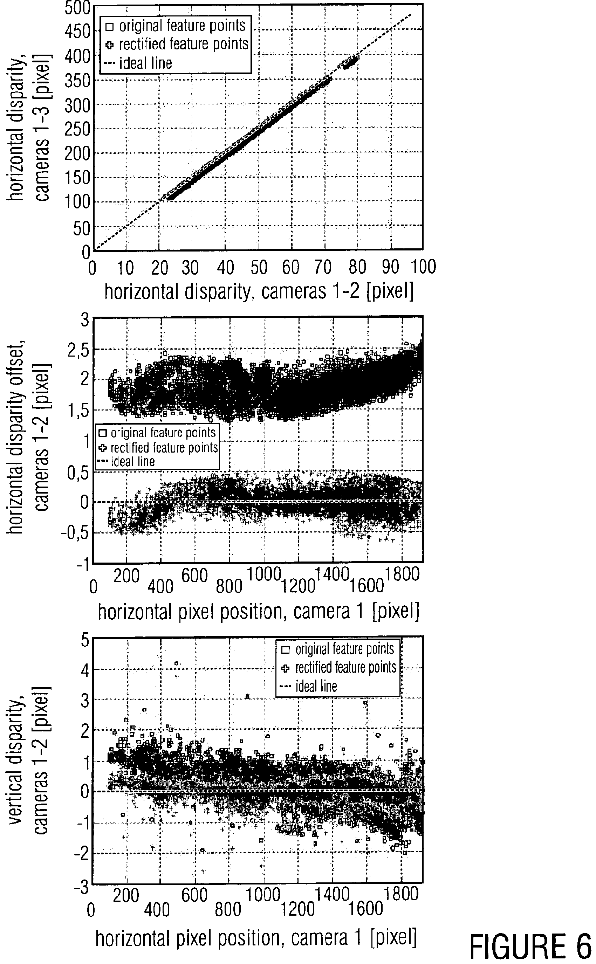

Fig. 6 the rectification accuracy is illustrated by analyzing the vertical and horizontal alignment before and after rectification of feature points estimated using [19].

Thus, above, concepts and embodiments for rectifying cameras in a linear array have been described. The rectification parameters are estimated using a linearized trifocal tensor. The results show that, based on feature point triplets from uncalibrated cameras, a vertical and horizontal alignment insuring proportional horizontal disparities may be performed.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

References

[1] L. An, Y. Jia, J. Wang, X. Zhang, and M. Li. An efficient rectification method for trinocular stereovision. In ICPR '04, vol. 4. Washington, DC, USA, 2004, pp. 56-59.

[2] N. Ayache and C. Hansen. Rectification of images for binocular and trinocular stereovision. in ICPR '88, vol. 1. Rome, Italy, November 1988, pp. 11-16.

[3] Y. K. Baik, J. H. Choi and K. M. Lee. An Efficient Trinocular Rectification Method for Stereo Vision. Proc. Frontiers of Computer Vision (FCV), Jan. 2007.

[4] F. Boutarel and V. Nozick. Epipolar rectification for autostereoscopic camera setup. In EAM Mechatronics 2010, Yokohama, Japan, November 2010, pp. 133-136.

[5] Du Xin, Li Hongdong. A Simple Rectification Method for Linear Multi-base line Stereovision System. Journal of Zhejiang University (Science), 2004, 5(5): 567-571.

[6] R. Hartley and A. Zisserman, Multiple View Geometry in Computer Vision, Cambridge University Press, 2000.

[7] W. He, W. Guozhong, L. Liliang, Z. Yang, A. Ping, Z. Zhaoyang. Fast automatic elimination of vertical parallax of multiview images. In Signal Processing (ICSP), 2010, vol., no., pp. 1004-1007, 24-28 Oct. 2010.

[8] M. Heinrichs and V. Rodehorst. Trinocular Rectification For Various Camera Setups. Symp. of ISPRS, Comm. III, PCV'06, pp. 43-48, Bonn, Germany, 2006.

[9] Y. Kang, C. Lee, and Y. Ho. An efficient rectification algorithm for multi-view images in parallel camera array. In 3DTV08, 2008, pp. 61-64.

[10] F. Kangni, R. Laganiere. Projective Rectification of Image Triplets from the Fundamental Matrix. ICASSP 2006, vol.2, no., pp.II, 14-19 May 2006.

[11] J. Mallon and P. F. Whelan. Projective rectification from the fundamental matrix. Image Vision Comput., vol. 23, pp. 643-650, July 2005.

[12] V. Nozick. Multiple view image rectification. Access Spaces (ISAS) 2011, 1st Intern. Symp. on, pp. 277-282, 17-19 June 2011.

[13] M. Okutomi and T. Kanade. A Multiple-Base line Stereo. In IEEE Trans. on Pattern Analysis and Machine Intelligence (PAMI), 1 5(4), 1993.

[14] A. Shashua. Algebraic functions for recognition. IEEE Trans. on Pattern Analysis and Machine Intelligence (PAMI), vol.17, no.8, pp. 779-789, Aug. 1995.

[15] C. Sun. Uncalibrated three-view image rectification. Image and Vision Computing, vol. 21, Issue 3, 1 March 2003, Pages 259-269.

[16] Z. Yang, A. Ping, W. He, Z. Zhaoyang. A rectification algorithm for un-calibrated multi-view images based on SIFT features. ICALIP2010, pp.143-147, 23-25 Nov. 2010.

[17] H. Zhang, J. Cech, R. Sara, F. Wu and Z. Hu. A Linear Trinocular Rectification Method for Accurate Stereoscopic Matching. BMVC 2003, pp. 29.1-10., Sep. 2003.

[18] F. Zilly, M. Müller, P. Eisert, and P. Kauff. Joint Estimation of Epipolar Geometry and Rectification Parameters using Point Correspondences for Stereoscopic TV Sequences. 3DPVT 2010, Paris, France, May 2010.

[19] F. Zilly, C. Riechert, P. Eisert, and P. Kauff, Semantic Kernels Binarized - A Feature Descriptor for Fast and Robust Matching", 8th Conf. on Visual Media Production (CVMP 2011), London, UK, November 2011.

**Claims**

1. Apparatus for determining rectifying homographies for a linear camera array to be arranged along a common base line (14) and have optical axes ($18_1$, $18_2$, $18_3$) of three cameras (10a, 10b, 10c) of the linear camera array extending in parallel to each other, the apparatus being configured to

   provide (34) feature point triplets (42) in three images (32a, 32b, 32c) of a scene captured by the three cameras (10a, 10b, 10c) of the linear camera array;

   using positions $(u,v)$, $(u',v')$, $(u'',v'')$ of the feature point triplets (42), form (36), per feature point triplet (42), a linear equation of type $A\vec{x} = \vec{b}$, where $\vec{x}$ is a vector the components $x_i$ of which comprise geometric parameters including pan, tilt and roll of non-reference cameras of the three cameras (10a, 10b, 10c) relative to a reference camera of the three cameras (10a, 10b, 10c), and A is a matrix and $\vec{b}$ is a vector, both dependent on the positions $(u, v)$, $(u',v')$, $(u'',v'')$ of the respective feature point triplet such that $A\vec{x} = \vec{b}$ is rewriteable into

$$\begin{bmatrix} u' \\ v' \\ 1 \end{bmatrix}_\times (u\mathcal{T}_1 + v\mathcal{T}_2 + \mathcal{T}_3) \begin{bmatrix} u'' \\ v'' \\ 1 \end{bmatrix}_\times = 0_{3\times 3}$$

where $\mathcal{T}_1$, $\mathcal{T}_2$, $\mathcal{T}_3$ are correlation slices of a trifocal tensor linearized according to a Taylor expansion around a perfect state of the linear camera array being perfectly aligned which has all terms of second and higher order omitted, wherein the elements

$$\mathcal{T}_i^{jk}$$

of the correlation slices of the trifocal tensor relate to projection matrices $P$, $P' = \begin{bmatrix} a_i^j \end{bmatrix}$, $P'' = \begin{bmatrix} b_i^j \end{bmatrix}$ describing the projections of a first, second and third of the three cameras (10a-10c), respectively, wherein $P$, $P'$ and $P''$ are of the form $P = KR[1|-C]$, $P' = K'R'[1|-C']$ and $P'' = K''R''[1|-C'']$, where $K$, $K'$, $K''$ are intrinsic matrices, $R$, $R'$, $R''$ are rotation matrices and $C$, $C'$, $C''$ are 3D vectors pointing to the camera centers (12a-12c) of the three cameras (10a-10c), and being equal to each other in two dimensions other than the common base line (14), and $K = \begin{bmatrix} f & 0 & 0 \\ 0 & f & 0 \\ 0 & 0 & 1 \end{bmatrix}$ and $R=1$; and

determine (38) values for the components $x_i$ which solve $A\vec{x} = \vec{b}$ for the feature point triplets; and

derive (40) homography matrices $H'$ and $H''$ for the second and third cameras (10b, 10c) using the determined values for $x_i$,

wherein the apparatus is configured such that

$$P' = \begin{bmatrix} \alpha_f' + 1 & -\alpha_z' & \alpha_y' & -c_x'(\alpha_f' + 1) \\ \alpha_z' & \alpha_f' + 1 & -\alpha_x' & -c_x'\alpha_z' \\ -\alpha_y' & \alpha_x' & 1 & c_x'\alpha_y' \end{bmatrix}$$

with

$$R' = \begin{bmatrix} 1 & -\alpha_z' & \alpha_y' \\ \alpha_z' & 1 & -\alpha_x' \\ -\alpha_y' & \alpha_x' & 1 \end{bmatrix},$$

$$C' = (c_x', 0,0),$$

and

$$K'(\alpha_f') = \begin{bmatrix} (1 + \alpha_f') & 0 & 0 \\ 0 & (1 + \alpha_f') & 0 \\ 0 & 0 & 1 \end{bmatrix},$$

and

$$P'' = \begin{bmatrix} \alpha_f'' + \alpha_r'' + 1 & -\alpha_z'' & \alpha_y'' + p_x'' & -c_x''(\alpha_f'' + \alpha_r'' + 1) \\ \alpha_z'' & \alpha_f'' + 1 & -\alpha_x'' & -c_x'' \alpha_z'' \\ -\alpha_y'' & \alpha_x'' & 1 & c_x'' \alpha_y'' \end{bmatrix}$$

with

$$R'' = \begin{bmatrix} 1 & -\alpha_z'' & \alpha_y'' \\ \alpha_z'' & 1 & -\alpha_x'' \\ -\alpha_y'' & \alpha_x'' & 1 \end{bmatrix},$$

$$C'' = (c_x'', 0, 0),$$

and

$$K''(\alpha_f'', \alpha_r'', p_x'') = \begin{bmatrix} (1+\alpha_f'')(1+\alpha_r'') & 0 & p_x'' \\ 0 & (1+\alpha_f'') & 0 \\ 0 & 0 & 1 \end{bmatrix},$$

so that

$$J_1 = \begin{bmatrix} (1+\alpha_f' + \alpha_f'' + \alpha_r'')\Delta c_x & \alpha_z''\Delta c_x & -\alpha_y''\Delta c_x \\ \alpha_z'\Delta c_x & 0 & 0 \\ -\alpha_y'\Delta c_x & 0 & 0 \end{bmatrix}$$

$$J_2 = \begin{bmatrix} -\alpha_z''c_x' + \alpha_z'c_x'' & (1+\alpha_f'+\alpha_f'')c_x' & \alpha_x''c_x' \\ -(1+\alpha_f'+\alpha_f''+\alpha_r'')c_x'' & \alpha_z'c_x' - \alpha_z''c_x'' & \alpha_y''c_x'' \\ -\alpha_x'c_x'' & -\alpha_y'c_x' & 0 \end{bmatrix}$$

$$J_3 = \begin{bmatrix} (\alpha_y'' + p_x'')c_x' - \alpha_y'c_x'' & -\alpha_x''c_x' & (1+\alpha_f')c_x' \\ \alpha_x'c_x'' & 0 & \alpha_z'c_x' \\ -(1+\alpha_f''+\alpha_r'')c_x'' & -\alpha_z''c_x'' & -\alpha_y'c_x' + \alpha_y''c_x'' \end{bmatrix}$$

,

a base line parameter is defined dependent on $c''_x$ and $c'_x$,
the first camera is the reference camera and the second and third cameras are the two non-reference cameras,

the components $x_i$ of $\bar{x}$ are $\alpha_b$, $\alpha_f''$, $\alpha'_f$, $\alpha_r''$, $\alpha_x'$, $\alpha_x''$, $\alpha_y'$, $\alpha_y''$, $\alpha_z'$, $\alpha_z''$, $p_x''$, where $\alpha_b$ is an additive correction for the baseline distance of the two non-reference cameras (10b,c), measured/normalized by the baseline distance between the reference camera 10a and the second camera (10b), and $\alpha_f''$, $\alpha'_f$, $\alpha_r''$, $\alpha_x'$, $\alpha_x''$, $\alpha_y'$, $\alpha_y''$, $\alpha_z'$, $\alpha_z''$, $p_x''$, are the geometric parameters, namely - from left to right - an additive correction of the two additive corrections of the focal lengths the two non-reference cameras (10b,c), measured/normalized by the focal length of the reference camera (10a), an additive isotropy deviation of the third camera (10c), two tilt correction angles for the two non-reference cameras, two pan correction angles for the two non-reference cameras, two roll correction angles for the two non-reference cameras and a shift of the principal point along the common base line of the third camera (10c), wherein the apparatus is configured to perform the derivation of the homography matrices $H'$ and $H''$ for the second and third cameras using the determined values for $x_i$ such that applying the homography matrices $H'$ and $H''$ to trigonometrical projection matrices $P'_{trig} = K' R_{trig}'[1|-C']$ and $P''_{trig} = K'' R_{trig}''[1|-C'']$ with

$$R'_{trig} = \begin{bmatrix} 1+\cos\alpha'_y+\cos\alpha'_z & -\sin\alpha'_z & \sin\alpha'_y \\ \sin\alpha'_z & 1+\cos\alpha'_x+\cos\alpha'_z & -\sin\alpha'_x \\ -\sin\alpha'_y & \sin\alpha'_x & 1+\cos\alpha'_x+\cos\alpha'_y \end{bmatrix},$$

$$R''_{trig} = \begin{bmatrix} 1+\cos\alpha''_y+\cos\alpha''_z & -\sin\alpha''_z & \sin\alpha''_y \\ \sin\alpha''_z & 1+\cos\alpha''_x+\cos\alpha''_z & -\sin\alpha''_x \\ -\sin\alpha''_y & \sin\alpha''_x & 1+\cos\alpha''_x+\cos\alpha''_y \end{bmatrix},$$

$$H'P'_{trig} = \begin{bmatrix} 1 & 0 & 0 & c'_x \\ 0 & 1 & 0 & 0 \\ 0 & 0 & 1 & 0 \end{bmatrix} \qquad H''P''_{trig} = \begin{bmatrix} 1 & 0 & 0 & c''_x \\ 0 & 1 & 0 & 0 \\ 0 & 0 & 1 & 0 \end{bmatrix}$$

result in , and , respectively.

2. Apparatus according to claim 1, wherein the apparatus is configured to perform the formation of $A\vec{x} = \vec{b}$ such that $A$ and $\vec{b}$ are independent from $\vec{x}$, but dependent on a base line parameter, and the components $x_i$ of $\vec{x}$ consist of the geometric parameters and an additive correction value for the base line parameter.

3. Apparatus according to claim 2, wherein the apparatus is configured to determine the values for $x_i$ iteratively with adjusting the base line parameter and solving $A\vec{x} = \vec{b}$ per iteration.

4. Apparatus according to claim 3, wherein the apparatus is configured to determine the values for $x_i$ iteratively until a magnitude of the additive correction value $\alpha_b$ falls below a predetermined threshold ($\in$).

5. Apparatus according to claim 4, wherein the apparatus is configured to set the base line parameter at the first iteration such that the second and third cameras have the same base line distance relative to the first camera ($\beta_{23} = \beta_{13}$).

6. Apparatus according to any of claims 1 to 5, wherein the apparatus is configured such that

$$C = (0,0,0),$$

$$C' = (c'_x, 0, 0),$$

and

$$C'' = (c''_x, 0, 0),$$

wherein a base line parameter is defined dependent on $c''_x$ and $c'_x$.

7. Apparatus according to any of claims 1 to 6, wherein the apparatus is configured such that the base line parameter is a base line ratio $\beta_{13} = c''_x / c'_x$ .

8. Apparatus according to any of claims 1 to 7, wherein the apparatus is configured to such that $R'$ and $R''$ are linearized for small changes of rotation parameters of the geometric parameters.

9. Apparatus according to claim 8, wherein the apparatus is configured to perform the derivation of the homography matrices H' and H" for the second and third cameras using the determined values for $x_i$ such that applying the homography matrices $H'$ and $H''$ to trigonometrical projection matrices $P' = K'R_{trig}'[1|\text{-}C']$ and $P'' = K''R_{trig}''[1|\text{-}C'']$ with $R_{trig}'$ and $R_{trig}''$ being dependent on the rotation parameters via trigonometric functions, result in ideal projection matrices corresponding to an ideal state of the linear camera array according to which the cameras of the linear camera array are arranged at the common base line axis and are co-oriented and have same intrinsic parameters.

10. Apparatus according to any of claims 1 to 9, wherein the apparatus is configured to, iteratively enhance the determined values for the components $x_i$ by
applying the homography matrices $H'$ and $H''$ to the positions of feature points of the feature point triplets within the second and third images, respectively, so as to obtain corrected positions; and
performing the formation, determination and derivation using the corrected positions.

11. Apparatus according to claim 10, wherein the apparatus is configured to stop iteratively enhancing the determined values for the components $x_i$ by, prior to each iteration,
reprojecting the feature point triplets at the corrected positions using the homography matrices $H'$ and $H''$; and
checking (58) as to whether the back-projections of the feature point triplets at the corrected positions fulfill a certain convergence criterion.

12. Method for determining rectifying homographies for a linear camera array to be arranged along a common base line (14) and have optical axes ($18_1$, $18_2$, $18_3$) of three cameras (10a, 10b, 10c) of the linear camera array extending in parallel to each other, the method comprising
providing (34) feature point triplets (42) in three images (32a, 32b, 32c) of a scene captured by three cameras (10a, 10b, 10c) of the linear camera array;
using positions $(u,v)$, $(u',v')$, $(u'',v')$ of the feature point triplets (42), forming (36), per feature point triplet (42), a linear equation of type $A\vec{x} = \vec{b}$ , where $\vec{x}$ is a vector the components $x_i$ of which comprise geometric parameters including pan, tilt and roll of non-reference cameras of the three cameras (10a, 10b, 10c) relative to a reference camera of the three cameras (10a, 10b, 10c), and A is a matrix and $\vec{b}$ is a vector, both dependent on the positions $(u,v)$, $(u',v')$, $(u'',v')$ of the respective feature point triplet such that $A\vec{x} = \vec{b}$ is rewriteable into

$$\begin{bmatrix} u' \\ v' \\ 1 \end{bmatrix}_\times (u\mathcal{T}_1 + v\mathcal{T}_2 + \mathcal{T}_3) \begin{bmatrix} u'' \\ v'' \\ 1 \end{bmatrix}_\times = 0_{3\times3}$$

where $\mathcal{T}_1, \mathcal{T}_2, \mathcal{T}_3$ are correlation slices of a trifocal tensor linearized according to a Taylor expansion around a perfect state of the linear camera array being perfectly aligned wherein the elements $\mathcal{T}_i^{jk}$ of the correlation slices of the trifocal tensor relate to projection matrices P, $P' = [a_i^j]$, $P'' = [b_i^j]$ describing the projections of a first, second and third of the three cameras (10a-10c), respectively, wherein $P$, $P'$ and $P''$ are of the form $P = KR[1|\text{-}C]$, $P' = K'R'[1|\text{-}C']$ and $P'' = K''R''[1|\text{-}C'']$, where $K$, $K'$, $K''$ are intrinsic matrices, $R$, $R'$, $R''$ are rotation matrices and $C$, $C'$, $C''$ are 3D vectors pointing to the camera centers (12a-12c) of the three cameras (10a-10c), and being equal to each other in two dimensions other than the common base line (14), and $K = \begin{bmatrix} f & 0 & 0 \\ 0 & f & 0 \\ 0 & 0 & 1 \end{bmatrix}$ and $R=1$; and determining (38) values for the components $x_i$ which solve $A\vec{x} = \vec{b}$ for the feature point triplets; and

deriving (40) homography matrices $H'$ and $H''$ for the second and third cameras (10b, 10c) using the determined values for $x_i$,

wherein

$$P' = \begin{bmatrix} \alpha_f' + 1 & -\alpha_z' & \alpha_y' & -c_x'\left(\alpha_f' + 1\right) \\ \alpha_z' & \alpha_f' + 1 & -\alpha_x' & -c_x'\alpha_z' \\ -\alpha_y' & \alpha_x' & 1 & c_x'\alpha_y' \end{bmatrix}$$

with

$$R' = \begin{bmatrix} 1 & -\alpha_z' & \alpha_y' \\ \alpha_z' & 1 & -\alpha_x' \\ -\alpha_y' & \alpha_x' & 1 \end{bmatrix},$$

$$C' = (c_x', 0, 0),$$

and

$$K'\left(\alpha_f'\right) = \begin{bmatrix} \left(1 + \alpha_f'\right) & 0 & 0 \\ 0 & \left(1 + \alpha_f'\right) & 0 \\ 0 & 0 & 1 \end{bmatrix},$$

and

$$P'' = \begin{bmatrix} \alpha_f'' + \alpha_r'' + 1 & -\alpha_z'' & \alpha_y'' + p_x'' & -c_x''\left(\alpha_f'' + \alpha_r'' + 1\right) \\ \alpha_z'' & \alpha_f'' + 1 & -\alpha_x'' & -c_x''\alpha_z'' \\ -\alpha_y'' & \alpha_x'' & 1 & c_x''\alpha_y'' \end{bmatrix}$$

with

$$R'' = \begin{bmatrix} 1 & -\alpha_z'' & \alpha_y'' \\ \alpha_z'' & 1 & -\alpha_x'' \\ -\alpha_y'' & \alpha_x'' & 1 \end{bmatrix},$$

$$C'' = (c_x'', 0, 0),$$

and

$$K''(\alpha_f'', \alpha_r'', p_x'') = \begin{bmatrix} (1 + \alpha_f'')(1 + \alpha_r'') & 0 & p_x'' \\ 0 & (1 + \alpha_f'') & 0 \\ 0 & 0 & 1 \end{bmatrix},$$

so that

$$\mathcal{T}_1 = \begin{bmatrix} (1 + \alpha'_f + \alpha''_f + \alpha''_r)\Delta c_x & \alpha''_z \Delta c_x & -\alpha''_y \Delta c_x \\ \alpha'_z \Delta c_x & 0 & 0 \\ -\alpha'_y \Delta c_x & 0 & 0 \end{bmatrix}$$

$$\mathcal{T}_2 = \begin{bmatrix} -\alpha''_z c'_x + \alpha'_z c''_x & (1 + \alpha'_f + \alpha''_f)c'_x & \alpha''_x c'_x \\ -(1 + \alpha'_f + \alpha''_f + \alpha''_r)c''_x & \alpha'_z c'_x - \alpha'_z c''_x & \alpha''_y c'_x \\ -\alpha'_x c''_x & -\alpha'_y c'_x & 0 \end{bmatrix}$$

$$\mathcal{T}_3 = \begin{bmatrix} (\alpha''_y + p''_x)c'_x - \alpha'_y c''_x & -\alpha''_x c'_x & (1 + \alpha'_f)c'_x \\ \alpha'_x c''_x & 0 & \alpha'_z c'_x \\ -(1 + \alpha''_f + \alpha''_r)c''_x & -\alpha''_z c'_x & -\alpha'_y c'_x + \alpha''_y c''_x \end{bmatrix}$$

,

a base line parameter is defined dependent on $c''_x$ and $c'_x$,

the first camera is the reference camera and the second and third cameras are the two non-reference cameras,

the components $x_i$ of $\bar{x}$ are $\alpha_b$, $\alpha''_f$, $\alpha'_f$, $\alpha''_r$, $\alpha'_x$, $\alpha''_x$, $\alpha'_y$, $\alpha''_y$, $\alpha'_z$, $\alpha''_z$, $p''_x$ , where $\alpha_b$ is an additive correction for the baseline distance of the two non-reference cameras (10b,c), measured/normalized by the baseline distance between the reference camera 10a and the second camera (10b), and $\alpha''_f$, $\alpha'_f$, $\alpha''_r$, $\alpha'_x$, $\alpha''_x$, $\alpha'_y$, $\alpha''_y$, $\alpha'_z$, $\alpha''_z$, $p''_x$,

are the geometric parameters, namely - from left to right - an additive correction of the two additive corrections of the focal lengths the two non-reference cameras (10b,c), measured/normalized by the focal length of the reference camera (10a), an additive isotropy deviation of the third camera (10c), two tilt correction angles for the two non-reference cameras, two pan correction angles for the two non-reference cameras, two roll correction angles for the two non-reference cameras and a shift of the principal point along the common base line of the third camera (10c), wherein the derivation of the homography matrices $H'$ and $H''$ for the second and third cameras using the determined values for $x_i$ is performed such that applying the homography matrices $H'$ and $H''$ to trigonometrical projection matrices

$$P'_{trig} = K' R_{trig}'[1\,|-C'] \text{ and } P''_{trig} = K'' R_{trig}''[1\,|-C''] \text{ with}$$

$$R'_{trig} = \begin{bmatrix} 1 + \cos\alpha'_y + \cos\alpha'_z & -\sin\alpha'_z & \sin\alpha'_y \\ \sin\alpha'_z & 1 + \cos\alpha'_x + \cos\alpha'_z & -\sin\alpha'_x \\ -\sin\alpha'_y & \sin\alpha'_x & 1 + \cos\alpha'_x + \cos\alpha'_y \end{bmatrix},$$

$$R''_{trig} = \begin{bmatrix} 1 + \cos\alpha''_y + \cos\alpha''_z & -\sin\alpha''_z & \sin\alpha''_y \\ \sin\alpha''_z & 1 + \cos\alpha''_x + \cos\alpha''_z & -\sin\alpha''_x \\ -\sin\alpha''_y & \sin\alpha''_x & 1 + \cos\alpha''_x + \cos\alpha''_y \end{bmatrix},$$

result in $H'P'_{trig} = \begin{bmatrix} 1 & 0 & 0 & c'_x \\ 0 & 1 & 0 & 0 \\ 0 & 0 & 1 & 0 \end{bmatrix}$, and $H''P''_{trig} = \begin{bmatrix} 1 & 0 & 0 & c''_x \\ 0 & 1 & 0 & 0 \\ 0 & 0 & 1 & 0 \end{bmatrix}$, respectively.

13. Computer-program having a program code for performing, when running on a computer, a method according to claim 12.

**Patentansprüche**

1. Vorrichtung zum Bestimmen von Gleichrichter-Homographien für ein lineares Kameraarray, das entlang einer gemeinsamen Basislinie (14) angeordnet werden soll und bei dem optische Achsen ($18_1$, $18_2$, $18_3$) von drei Kameras (10a, 10b, 10c) des linearen Kameraarrays sich parallel zueinander erstrecken sollen, wobei die Vorrichtung konfiguriert ist zum

   Bereitstellen (34) von Merkmalspunkt-Triplets (42) in drei Bildern (32a, 32b, 32c) einer Szene, die durch die drei Kameras (10a, 10b, 10c) des linearen Kameraarrays erfasst ist;

   Verwenden von Positionen $(u,v)$, $(u',v')$, $(u'',v')$ der Merkmalspunkt-Triplets (42), Bilden (36), pro Merkmalspunkt-Triplet (42), einer linearen Gleichung vom Typ $A\vec{x} = \vec{b}$, wobei $\vec{x}$ ein Vektor ist, dessen Komponenten $x_i$ geometrische Parameter einschließlich Schwenken, Neigen und Rollen von Nicht-Referenzkameras der drei Kameras (10a, 10b, 10c) bezüglich einer Referenzkamera der drei Kameras (10a, 10b, 10c) aufweisen, und A eine Matrix ist und $\vec{b}$ ein Vektor ist, die beide von den Positionen $(u,v)$, $(u',v')$, $(u'',v'')$ des jeweiligen Merkmalspunkt-Triplets abhängig sind, so dass $A\vec{x} = \vec{b}$ umgeschrieben werden kann zu

   $$\begin{bmatrix} u' \\ v' \\ 1 \end{bmatrix}_{\times} (u\mathcal{T}_1 + v\mathcal{T}_2 + \mathcal{T}_3) \begin{bmatrix} u'' \\ v'' \\ 1 \end{bmatrix}_{\times} = 0_{3\times 3} \quad ,$$

   wobei $\mathcal{T}_1, \mathcal{T}_2, \mathcal{T}_3$ Korrelations-Slices eines Trifokaltensors sind, der gemäß einer Taylorschen Entwicklung um einen perfekten Zustand des linearen Kameraarrays, das perfekt ausgerichtet ist, linearisiert ist, wobei alle Terme zweiter und höherer Ordnung weggelassen sind, wobei die Elemente $\mathcal{T}_i^{jk}$ der Korrelations-Slices des Trifokaltensors sich auf Projektionsmatrizes $P$, $P' = \left[a_i^j\right]$, $P'' = \left[b_i^j\right]$ beziehen, die Projektionen einer ersten, zweiten beziehungsweise dritten der drei Kameras (10a-10c) beschreiben, wobei $P$, $P'$ und $P''$ die Form $P = KR[1|-C]$, $P' = K'R'[1|-C']$ und $P'' = K''R''[1|-C'']$ aufweisen, wobei $K$, $K'$, $K''$ intrinsische Matrizes sind, $R$, $R'$, $R''$ Rotationsmatrizes sind und C, $C'$, C'' 3D-Vektoren sind, die zu den Kameramittelpunkten (12a-12c) der drei Kameras (10a-10c) zeigen und in zwei Dimensionen abgesehen von der gemeinsamen Basislinie (14) zueinander gleich sind, und

   $$K = \begin{bmatrix} f & 0 & 0 \\ 0 & f & 0 \\ 0 & 0 & 1 \end{bmatrix}$$ und $R$=1 ist; und

   Bestimmen (38) von Werten für die Komponenten $x_i$, die $A\bar{x} = \bar{b}$ für die Merkmalspunkt-Triplets lösen; und

   Ableiten (40) von Homographiematrizes $H'$ und $H''$ für die zweite und dritte Kamera (10b, 10c) unter Verwendung der bestimmten Werte für $x_i$,

   wobei die Vorrichtung derart konfiguriert ist, dass

   $$P' = \begin{bmatrix} \alpha'_f + 1 & -\alpha'_z & \alpha'_y & -c'_x\left(\alpha'_f + 1\right) \\ \alpha'_z & \alpha'_f + 1 & -\alpha'_x & -c'_x\alpha'_z \\ -\alpha'_y & \alpha'_x & 1 & c'_x\alpha'_y \end{bmatrix}$$

   mit

$$R' = \begin{bmatrix} 1 & -\alpha'_z & \alpha'_y \\ \alpha'_z & 1 & -\alpha'_x \\ -\alpha'_y & \alpha'_x & 1 \end{bmatrix},$$

$$C' = (c'_x, 0, 0)$$

und

$$K'(\alpha'_f) = \begin{bmatrix} (1 + \alpha'_f) & 0 & 0 \\ 0 & (1 + \alpha'_f) & 0 \\ 0 & 0 & 1 \end{bmatrix}$$

und

$$P'' = \begin{bmatrix} \alpha''_f + \alpha''_r + 1 & -\alpha''_z & \alpha''_y + p''_x & -c''_x(\alpha''_f + \alpha''_r + 1) \\ \alpha''_z & \alpha''_f + 1 & -\alpha''_x & -c''_x\alpha''_z \\ -\alpha''_y & \alpha''_x & 1 & c''_x\alpha''_y \end{bmatrix}$$

mit

$$R'' = \begin{bmatrix} 1 & -\alpha''_z & \alpha''_y \\ \alpha''_z & 1 & -\alpha''_x \\ -\alpha''_y & \alpha''_x & 1 \end{bmatrix},$$

$$C'' = (c''_x, 0, 0)$$

und

$$K''(\alpha''_f, \alpha''_r, p''_x) = \begin{bmatrix} (1 + \alpha''_f)(1 + \alpha''_r) & 0 & p''_x \\ 0 & (1 + \alpha''_f) & 0 \\ 0 & 0 & 1 \end{bmatrix},$$

so dass

$$T_1 = \begin{bmatrix} (1 + \alpha'_f + \alpha''_f + \alpha''_r)\Delta c_x & \alpha''_z\Delta c_x & -\alpha''_y\Delta c_x \\ \alpha'_z\Delta c_x & 0 & 0 \\ -\alpha'_y\Delta c_x & 0 & 0 \end{bmatrix}$$

$$T_2 = \begin{bmatrix} -\alpha''_z c'_x + \alpha'_z c''_x & (1 + \alpha'_f + \alpha''_f)c'_x & \alpha''_x c'_x \\ -(1 + \alpha'_f + \alpha''_f + \alpha''_r)c''_x & \alpha'_z c'_x - \alpha''_z c''_x & \alpha''_y c''_x \\ -\alpha'_x c''_x & -\alpha'_y c'_x & 0 \end{bmatrix}$$

$$\mathcal{J}_3 = \begin{bmatrix} (\alpha_y'' + p_x'')c_x' - \alpha_y'c_x'' & -\alpha_x''c_x' & (1 + \alpha_f')c_x' \\ \alpha_x'c_x'' & 0 & \alpha_z'c_x'' \\ -(1 + \alpha_f'' + \alpha_r'')c_x'' & -\alpha_z''c_x'' & -\alpha_y'c_x' + \alpha_y''c_x'' \end{bmatrix},$$

ein Basislinienparameter abhängig von $c_x''$ und $c_x'$ definiert ist,

die erste Kamiere die Referenzkamera ist und die zweite und dritte Kamera die zwei Nicht-Referenzkameras sind,

die Komponenten $x_i$ von $\vec{x}$ $\alpha_b$, $\alpha_f''$, $\alpha_f'$, $\alpha_r''$, $\alpha_x'$, $\alpha_x''$, $\alpha_y'$, $\alpha_y''$, $\alpha_z'$, $\alpha_z''$, $p_x''$ sind, wobei $\alpha_b$ eine additive Korrektur für den Basislinienabstand der zwei Nicht-Referenzkameras (10b,c) ist, gemessen/normiert durch den Basislinienabstand zwischen der Referenzkamera 10a und der zweiten Kamera (10b), und $\alpha_f''$, $\alpha_f'$, $\alpha_r''$, $\alpha_x'$, $\alpha_x''$, $\alpha_y'$, $\alpha_y''$, $\alpha_z'$, $\alpha_z''$, $p_x''$ die geometrischen Parameter sind, nämlich - von links nach rechts - eine additive Korrektur der zwei additiven Korrekturen der Brennweiten der zwei Nicht-Referenzkameras (10b,c), gemessen/normiert durch die Brennweite der Referenzkamera (10a), eine additive Isotropieabweichung der dritten Kamera (10c), zwei Neigungs-Korrekturwinkel für die zwei Nicht-Referenzkameras, zwei Schwenk-Korrekturwinkel für die zwei Nicht-Referenzkameras, zwei Roll-Korrekturwinkel für die zwei Nicht-Referenzkameras und eine Verschiebung des Hauptpunkts entlang der gemeinsamen Basislinie der dritten Kamera (10c),

wobei die Vorrichtung konfiguriert ist zum Durchführen der Ableitung der Homographiematrizes *H'* und *H''* für die zweite und dritte Kamera unter Verwendung der bestimmten Werte für $x_i$, so dass ein Anwenden der Homographiematrizes *H'* und *H''* auf trigonometrische Projektionsmatrizes $P_{trig}' = K' R_{trig}'[1 \mid -C']$ und $P_{trig}'' = K'' R_{trig}''[1 \mid -C'']$ mit

$$R_{trig}' = \begin{bmatrix} 1 + \cos\alpha_y' + \cos\alpha_z' & -\sin\alpha_z' & \sin\alpha_y' \\ \sin\alpha_z' & 1 + \cos\alpha_x' + \cos\alpha_z' & -\sin\alpha_x' \\ -\sin\alpha_y' & \sin\alpha_x' & 1 + \cos\alpha_x' + \cos\alpha_y' \end{bmatrix},$$

$$R_{trig}'' = \begin{bmatrix} 1 + \cos\alpha_y'' + \cos\alpha_z'' & -\sin\alpha_z'' & \sin\alpha_y'' \\ \sin\alpha_z'' & 1 + \cos\alpha_x'' + \cos\alpha_z'' & -\sin\alpha_x'' \\ -\sin\alpha_y'' & \sin\alpha_x'' & 1 + \cos\alpha_x'' + \cos\alpha_y'' \end{bmatrix},$$

$$H'P_{trig}' = \begin{bmatrix} 1 & 0 & 0 & c_x' \\ 0 & 1 & 0 & 0 \\ 0 & 0 & 1 & 0 \end{bmatrix} \quad \text{beziehungsweise} \quad H''P_{trig}'' = \begin{bmatrix} 1 & 0 & 0 & c_x'' \\ 0 & 1 & 0 & 0 \\ 0 & 0 & 1 & 0 \end{bmatrix}.$$

Folgendes ergibt:

2.  Vorrichtung gemäß Anspruch 1, wobei die Vorrichtung konfiguriert ist zum Durchführen der Bildung von $A\bar{x} = \bar{b}$ derart, dass *A* und $\bar{b}$ von $\bar{x}$ unabhängig sind, jedoch von einem Basislinienparameter abhängig sind, und die Komponenten $x_i$ von $\bar{x}$ aus den geometrischen Parametern und einem Additive-Korrektur-Wert für den Basislinienparameter bestehen.

3.  Vorrichtung gemäß Anspruch 2, wobei die Vorrichtung konfiguriert ist zum Bestimmen der Werte für $x_i$ auf iterative Weise, unter Anpassen des Basislinienparameters und Lösen von $A\bar{x} = \bar{b}$ pro Iteration.

4.  Vorrichtung gemäß Anspruch 3, wobei die Vorrichtung konfiguriert ist zum Bestimmen der Werte für $x_i$ auf iterative Weise, bis ein Betrag des Additive-Korrektur-Werts $\alpha_b$ unter einen vorbestimmten Schwellenwert ($\in$) fällt.

**5.** Vorrichtung gemäß Anspruch 4, wobei die Vorrichtung konfiguriert ist zum Festlegen des Basislinienparameters bei der ersten Iteration, so dass die zweite und dritte Kamera denselben Basislinienabstand bezüglich der ersten Kamera aufweisen ($\beta_{23}=\beta_{13}$).

**6.** Vorrichtung gemäß einem der Ansprüche 1 bis 5, wobei die Vorrichtung derart konfiguriert ist, dass

$$C = (0,0,0),$$

$$C' = (c'_x, 0,0)$$

und

$$C'' = (c''_x, 0,0)_,$$

wobei ein Basislinienparameter abhängig von $c''_x$ und $c'_x$ definiert ist.

**7.** Vorrichtung gemäß einem der Ansprüche 1 bis 6, wobei die Vorrichtung derart konfiguriert ist, dass der Basislinienparameter ein Basislinienverhältnis $\beta_{13} = c''_x/c'_x$ ist.

**8.** Vorrichtung gemäß einem der Ansprüche 1 bis 7, wobei die Vorrichtung derart konfiguriert ist, dass $R'$ und $R''$ für kleine Änderungen von Rotationsparametern der geometrischen Parameter linearisiert sind.

**9.** Vorrichtung gemäß Anspruch 8, wobei die Vorrichtung konfiguriert ist zum Durchführen der Ableitung der Homographiematrizes H' und H" für die zweite und dritte Kamera unter Verwendung der bestimmten Werte für $x_i$, so dass ein Anwenden der Homographiematrizes $H'$ und $H''$ auf trigonometrische Projektionsmatrizes $P' = K'R_{trig}'[1|-C']$ und $P'' = K''R_{trig}''[1|-C'']$, wobei $R_{trig}'$ und $R_{trig}''$ von den Rotationsparametern über trigonometrische Funktionen abhängig sind, zu idealen Projektionsmatrizes führt, die einem idealen Zustand des linearen Kameraarrays entsprechen, gemäß dem die Kameras des linearen Kameraarrays an der Achse der gemeinsamen Basislinie angeordnet sind und gemeinsam ausgerichtet sind und dieselben intrinsischen Parameter aufweisen.

**10.** Vorrichtung gemäß einem der Ansprüche 1 bis 9, wobei die Vorrichtung konfiguriert ist zum iterativen Erhöhen der bestimmten Werte für die Komponenten $x_i$, indem Folgendes durchgeführt wird:

Anwenden der Homographiematrizes $H'$ und $H''$ auf die Positionen von Merkmalspunkten der Merkmalspunkt-Triplets in dem zweiten beziehungsweise dritten Bild, um korrigierte Positionen zu erhalten; und
Durchführen der Bildung, Bestimmung und Ableitung unter Verwendung der korrigierten Positionen.

**11.** Vorrichtung gemäß Anspruch 10, wobei die Vorrichtung konfiguriert ist zum Beenden des iterativen Erhöhens der bestimmten Werte für die Komponenten $x_i$, indem vor jeder Iteration Folgendes durchgeführt wird:

Re-projizieren der Merkmalspunkt-Triplets an den korrigierten Positionen unter Verwendung der Homographiematrizes $H'$ und $H''$; und
Prüfen (58), ob die Rückprojektionen der Merkmalspunkt-Triplets an den korrigierten Positionen ein bestimmtes Konvergenzkriterium erfüllen.

**12.** Verfahren zum Bestimmen von Gleichrichter-Homographien für ein lineares Kameraarray, das entlang einer gemeinsamen Basislinie (14) angeordnet werden soll und bei dem optische Achsen ($18_1$, $18_2$, $18_3$) von drei Kameras (10a, 10b, 10c) des linearen Kameraarrays sich parallel zueinander erstrecken sollen, wobei das Verfahren folgende Schritte aufweist
Bereitstellen (34) von Merkmalspunkt-Triplets (42) in drei Bildern (32a, 32b, 32c) einer Szene, die durch die drei Kameras (10a, 10b, 10c) des linearen Kameraarrays erfasst ist;
Verwenden von Positionen $(u,v)$, $(u',v')$, $(u'',v'')$ der Merkmalspunkt-Triplets (42), Bilden (36), pro Merkmalspunkt-Triplet (42), einer linearen Gleichung vom Typ $A\bar{x} = \bar{b}$, wobei $\bar{x}$ ein Vektor ist, dessen Komponenten $x_i$ geometrische Parameter einschließlich Schwenken, Neigen und Rollen von Nicht-Referenzkameras der drei Kameras (10a, 10b, 10c) bezüglich einer Referenzkamera der drei Kameras (10a, 10b, 10c) aufweisen, und A eine Matrix ist und $\bar{b}$ ein Vektor ist, die beide von den Positionen $(u,v)$, $(u',v')$, $(u'',v'')$ des jeweiligen Merkmalspunkt-Triplets abhängig sind,

so dass $A\bar{x} = \bar{b}$ umgeschrieben werden kann zu $\begin{bmatrix} u' \\ v' \\ 1 \end{bmatrix}_\times (u\mathcal{T}_1 + v\mathcal{T}_2 + \mathcal{T}_3) \begin{bmatrix} u'' \\ v'' \\ 1 \end{bmatrix}_\times = 0_{3\times3}$ wobei $\mathcal{T}_1, \mathcal{T}_2, \mathcal{T}_3$ Korrelations-Slices eines Trifokaltensors sind, der gemäß einer Taylorschen Entwicklung um einen perfekten Zustand des linearen Kameraarrays, das perfekt ausgerichtet ist, linearisiert wird, wobei die Elemente $\mathcal{T}_i^{jk}$ der

Korrelations-Slices des Trifokaltensors sich auf Projektionsmatrizes $P$, $P' = \begin{bmatrix} a_i^j \end{bmatrix}$, $P'' = \begin{bmatrix} b_i^j \end{bmatrix}$ beziehen, die die Projektionen einer ersten, zweiten beziehungsweise dritten der drei Kameras (10a-10c) beschreiben, wobei $P$, $P'$ und $P''$ die Form $P = KR[1|-C]$, $P' = K'R'[1|-C']$ und $P'' = K''R''[1|-C'']$ aufweisen, wobei $K$, $K'$, $K''$ intrinsische Matrizes sind, $R$, $R'$, $R''$ Rotationsmatrizes sind und $C$, $C'$, $C''$ 3D-Vektoren sind, die zu den Kameramittelpunkten (12a-12c) der drei Kameras (10a-10c) zeigen und in zwei Dimensionen abgesehen von der gemeinsamen Basislinie (14) zueinander gleich sind, und $K = \begin{bmatrix} f & 0 & 0 \\ 0 & f & 0 \\ 0 & 0 & 1 \end{bmatrix}$ und $R = 1$ ist; und Bestimmen (38) von Werten für die Komponenten $x_i$, die $A\bar{x} = \bar{b}$ für die Merkmalspunkt-Triplets lösen; und

Ableiten (40) von Homographiematrizes $H'$ und $H''$ für die zweite und dritte Kamera (10b, 10c) unter Verwendung der bestimmten Werte für $x_i$,

wobei

$$P' = \begin{bmatrix} \alpha_f' + 1 & -\alpha_z' & \alpha_y' & -c_x'(\alpha_f' + 1) \\ \alpha_z' & \alpha_f' + 1 & -\alpha_x' & -c_x'\alpha_z' \\ -\alpha_y' & \alpha_x' & 1 & c_x'\alpha_y' \end{bmatrix}$$

mit

$$R' = \begin{bmatrix} 1 & -\alpha_z' & \alpha_y' \\ \alpha_z' & 1 & -\alpha_x' \\ -\alpha_y' & \alpha_x' & 1 \end{bmatrix},$$

$$C' = (c_x', 0, 0)$$

und

$$K'(\alpha_f') = \begin{bmatrix} (1 + \alpha_f') & 0 & 0 \\ 0 & (1 + \alpha_f') & 0 \\ 0 & 0 & 1 \end{bmatrix}$$

und

$$P'' = \begin{bmatrix} \alpha_f'' + \alpha_r'' + 1 & -\alpha_z'' & \alpha_y'' + p_x'' & -c_x''(\alpha_f'' + \alpha_r'' + 1) \\ \alpha_z'' & \alpha_f'' + 1 & -\alpha_x'' & -c_x''\alpha_z'' \\ -\alpha_y'' & \alpha_x'' & 1 & c_x''\alpha_y'' \end{bmatrix}$$

mit

$$R'' = \begin{bmatrix} 1 & -\alpha_z'' & \alpha_y'' \\ \alpha_z'' & 1 & -\alpha_x'' \\ -\alpha_y'' & \alpha_x'' & 1 \end{bmatrix},$$

$$C'' = (c_x'', 0, 0)$$

und

$$K''(\alpha_f'', \alpha_r'', p_x'') = \begin{bmatrix} (1 + \alpha_f'')(1 + \alpha_r'') & 0 & p_x'' \\ 0 & (1 + \alpha_f'') & 0 \\ 0 & 0 & 1 \end{bmatrix},$$

so dass

$$J_1 = \begin{bmatrix} (1 + \alpha_f' + \alpha_f'' + \alpha_r'')\Delta c_x & \alpha_z''\Delta c_x & -\alpha_y''\Delta c_x \\ \alpha_z'\Delta c_x & 0 & 0 \\ -\alpha_y'\Delta c_x & 0 & 0 \end{bmatrix}$$

$$J_2 = \begin{bmatrix} -\alpha_z''c_x' + \alpha_z'c_x'' & (1 + \alpha_f' + \alpha_f'')c_x' & \alpha_x''c_x' \\ -(1 + \alpha_f' + \alpha_f'' + \alpha_r'')c_x'' & \alpha_z'c_x' - \alpha_z''c_x'' & \alpha_y'c_x'' \\ -\alpha_x'c_x'' & -\alpha_y'c_x' & 0 \end{bmatrix}$$

$$J_3 = \begin{bmatrix} (\alpha_y'' + p_x'')c_x' - \alpha_y'c_x'' & -\alpha_x''c_x' & (1 + \alpha_f')c_x' \\ \alpha_x'c_x'' & 0 & \alpha_z'c_x' \\ -(1 + \alpha_f'' + \alpha_r'')c_x'' & -\alpha_z''c_x'' & -\alpha_y'c_x' + \alpha_y''c_x'' \end{bmatrix},$$

ein Basislinienparameter abhängig von $c''_x$ und $c'_x$ definiert ist,
die erste Kamiere die Referenzkamera ist und die zweite und dritte Kamera die zwei Nicht-Referenzkameras sind,
die Komponenten $x_i$ von $\overline{x}$ $\alpha_b$, $\alpha_f''$, $\alpha_f'$, $\alpha_r''$, $\alpha_x'$, $\alpha_x''$, $\alpha_y'$, $\alpha_y''$, $\alpha_z'$, $\alpha_z''$, $p_x''$ sind, wobei $\alpha_b$ eine additive Korrektur für den Basislinienabstand der zwei Nicht-Referenzkameras (10b,c) ist, gemessen/normiert durch den Basislinienabstand zwischen der Referenzkamera 10a und der zweiten Kamera (10b), und $\alpha_f''$, $\alpha_f'$, $\alpha_r''$, $\alpha_x'$, $\alpha_x''$, $\alpha_y'$, $\alpha_y''$, $\alpha_z'$, $\alpha_z''$, $p_x''$ die geometrischen Parameter sind, nämlich - von links nach rechts - eine additive Korrektur der zwei additiven Korrekturen der Brennweiten der zwei Nicht-Referenzkameras (10b,c), gemessen/normiert durch die Brennweite der Referenzkamera (10a), eine additive Isotropieabweichung der dritten Kamera (10c), zwei Neigungs-Korrekturwinkel für die zwei Nicht-Referenzkameras, zwei Schwenk-Korrekturwinkel für die zwei Nicht-Referenzkameras, zwei Roll-Korrekturwinkel für die zwei Nicht-Referenzkameras und eine Verschiebung des Hauptpunkts entlang der gemeinsamen Basislinie der dritten Kamera (10c),
wobei die Ableitung der Homographiematrizes $H'$ und $H''$ für die zweite und dritte Kamera unter Verwendung der bestimmten Werte für $x_i$ derart durchgeführt wird, dass ein Anwenden der Homographiematrizes $H'$ und $H''$ auf trigonometrische Projektionsmatrizes $P'_{trig} = K' R_{trig}' [1 \,|\, -C']$ und $P''_{trig} = K'' R_{trig}'' [1 \,|\, -C'']$ mit

$$R'_{trig} = \begin{bmatrix} 1 + \cos\alpha'_y + \cos\alpha'_z & -\sin\alpha'_z & \sin\alpha'_y \\ \sin\alpha'_z & 1 + \cos\alpha'_x + \cos\alpha'_z & -\sin\alpha'_x \\ -\sin\alpha'_y & \sin\alpha'_x & 1 + \cos\alpha'_x + \cos\alpha'_y \end{bmatrix},$$

$$R''_{trig} = \begin{bmatrix} 1 + \cos\alpha''_y + \cos\alpha''_z & -\sin\alpha''_z & \sin\alpha''_y \\ \sin\alpha''_z & 1 + \cos\alpha''_x + \cos\alpha''_z & -\sin\alpha''_x \\ -\sin\alpha''_y & \sin\alpha''_x & 1 + \cos\alpha''_x + \cos\alpha''_y \end{bmatrix},$$

Folgendes ergibt:
$$H'P'_{trig} = \begin{bmatrix} 1 & 0 & 0 & c'_x \\ 0 & 1 & 0 & 0 \\ 0 & 0 & 1 & 0 \end{bmatrix}$$
beziehungsweise
$$H''P''_{trig} = \begin{bmatrix} 1 & 0 & 0 & c''_x \\ 0 & 1 & 0 & 0 \\ 0 & 0 & 1 & 0 \end{bmatrix}.$$

**13.** Computerprogramm mit einem Programmcode zum Durchführen eines Verfahrens gemäß Anspruch 12, wenn dasselbe auf einem Computer läuft.

## Revendications

**1.** Appareil pour déterminer des homographies de rectification pour un réseau de caméras linéaire à disposer le long d'une ligne de base commune (14) et présentant des axes optiques ($18_1$, $18_2$, $18_3$) de trois caméras (10a, 10b, 10c) du réseau de caméras linéaire qui s'étendent parallèlement l'un à l'autre, l'appareil étant configuré pour

fournir (34) des triplets de points caractéristiques (42) dans trois images (32a, 32b, 32c) d'une scène capturée par les trois caméras (10a, 10b, 10c) du réseau de caméras linéaire;

utiliser les positions $(u,v)$, $(u',v')$, $(u'',v'')$ des triplets de points caractéristiques (42), former (36), par triplet de points caractéristiques (42), une équation linéaire de type $A\bar{x} = \bar{b}$, où $\bar{x}$ est un vecteur dont les composantes $x_i$ comprennent des paramètres géométriques comportant le panoramique, l'inclinaison et le roulis des caméras non de référence des trois caméras (10a, 10b, 10c) par rapport à une caméra de référence des trois caméras (10a, 10b, 10c), et A est une matrice et $\bar{b}$ est un vecteur, tous deux dépendant des positions $(u,v)$, $(u',v')$, $(u'',v'')$ du triplet du points caractéristiques respectif, de sorte que $A\bar{x} = \bar{b}$ puisse être réécrite comme

$$\begin{bmatrix} u' \\ v' \\ 1 \end{bmatrix}_{\times} (u\mathcal{T}_1 + v\mathcal{T}_2 + \mathcal{T}_3) \begin{bmatrix} u'' \\ v'' \\ 1 \end{bmatrix}_{\times} = 0_{3\times3}$$

où $\mathcal{T}_1$, $\mathcal{T}_2$, $\mathcal{T}_3$ sont des tranches de corrélation d'un tenseur trifocal linéarisé selon une expansion de Taylor autour d'un état parfait du réseau de caméras linéaire qui est parfaitement aligné et dans lequel sont omis tous les termes de deuxième ordre et d'ordre supérieur, où les éléments

$$\mathcal{T}_i^{jk}$$

des tranches de corrélation du tenseur trifocal se rapportent aux matrices de projection $P$, $P' = [a_i^j]$, $P'' = [b_i^j]$ qui décrivent les projections respectivement d'une première, d'une deuxième et d'une troisième des trois caméras (10a à 10c), où $P$, $P'$ et $P''$ sont de forme $P = KR[1|-C]$, $P' = K'R'[1|-C']$ et $P'' = K''R''[1|-C'']$, où $K$, $K'$, $K''$ sont des matrices intrinsèques, $R$, $R'$, $R''$ sont des matrices de rotation et $C$, $C'$, $C''$ sont des vecteurs 3D pointant vers les centres (12a à 12c) des trois caméras (10a à 10c), et sont l'un à l'autre dans deux dimensions autres que

$$K = \begin{bmatrix} f & 0 & 0 \\ 0 & f & 0 \\ 0 & 0 & 1 \end{bmatrix}$$

la ligne de base commune (14), et $K = \begin{bmatrix} f & 0 & 0 \\ 0 & f & 0 \\ 0 & 0 & 1 \end{bmatrix}$ et $R$=1; et déterminer (38) les valeurs pour les composantes $x_i$ qui résolvent $A\overline{x} = \overline{b}$ pour les triplets de points caractéristiques; et

dériver (40) matrices d'homographie $H'$ et H" pour les deuxième et troisième caméras (10b, 10c) à l'aide des valeurs déterminées pour $x_i$,

dans lequel l'appareil est configuré de sorte que

$$P' = \begin{bmatrix} \alpha'_f + 1 & -\alpha'_z & \alpha'_y & -c'_x(\alpha'_f + 1) \\ \alpha'_z & \alpha'_f + 1 & -\alpha'_x & -c'_x\alpha'_z \\ -\alpha'_y & \alpha'_x & 1 & c'_x\alpha'_y \end{bmatrix}$$

avec

$$R' = \begin{bmatrix} 1 & -\alpha'_z & \alpha'_y \\ \alpha'_z & 1 & -\alpha'_x \\ -\alpha'_y & \alpha'_x & 1 \end{bmatrix},$$

$$C' = (c'_x, 0, 0),$$

et

$$K'(\alpha'_f) = \begin{bmatrix} (1 + \alpha'_f) & 0 & 0 \\ 0 & (1 + \alpha'_f) & 0 \\ 0 & 0 & 1 \end{bmatrix},$$

et

$$P'' = \begin{bmatrix} \alpha''_f + \alpha''_r + 1 & -\alpha''_z & \alpha''_y + p''_x & -c''_x(\alpha''_f + \alpha''_r + 1) \\ \alpha''_z & \alpha''_f + 1 & -\alpha''_x & -c''_x\alpha''_z \\ -\alpha''_y & \alpha''_x & 1 & c''_x\alpha''_y \end{bmatrix}$$

avec

$$R'' = \begin{bmatrix} 1 & -\alpha''_z & \alpha''_y \\ \alpha''_z & 1 & -\alpha''_x \\ -\alpha''_y & \alpha''_x & 1 \end{bmatrix},$$

$$C'' = (c''_x, 0, 0),$$

et

$$K''(\alpha_f'', \alpha_r'', p_x'') = \begin{bmatrix} (1 + \alpha_f'')(1 + \alpha_r'') & 0 & p_x'' \\ 0 & (1 + \alpha_f'') & 0 \\ 0 & 0 & 1 \end{bmatrix},$$

de sorte que

$$\mathcal{T}_1 = \begin{bmatrix} (1 + \alpha_f' + \alpha_f'' + \alpha_r'')\Delta c_x & \alpha_z''\Delta c_x & -\alpha_y''\Delta c_x \\ \alpha_z'\Delta c_x & 0 & 0 \\ -\alpha_y'\Delta c_x & 0 & 0 \end{bmatrix}$$

$$\mathcal{T}_2 = \begin{bmatrix} -\alpha_z''c_x' + \alpha_z'c_x'' & (1 + \alpha_f' + \alpha_f'')c_x' & \alpha_x''c_x' \\ -(1 + \alpha_f' + \alpha_f'' + \alpha_r'')c_x'' & \alpha_z'c_x' - \alpha_z''c_x'' & \alpha_y''c_x' \\ -\alpha_x'c_x'' & -\alpha_y'c_x' & 0 \end{bmatrix}$$

$$\mathcal{T}_3 = \begin{bmatrix} (\alpha_y'' + p_x'')c_x' - \alpha_y'c_x'' & -\alpha_x''c_x' & (1 + \alpha_f')c_x' \\ \alpha_x'c_x'' & 0 & \alpha_z'c_x' \\ -(1 + \alpha_f'' + \alpha_r'')c_x'' & -\alpha_z''c_x' & -\alpha_y'c_x' + \alpha_y''c_x'' \end{bmatrix},$$

un paramètre de ligne de base est défini en fonction de $c''_x$ et $c'_x$, la première caméra est la caméra de référence et les deuxième et troisième caméras sont les deux caméras non de référence,

les composantes $x_i$ de $\overline{x}$ sont $\alpha_b$, $\alpha_f''$, $\alpha_f'$, $\alpha_r''$, $\alpha_x'$, $\alpha_x''$, $\alpha_y'$, $\alpha_y''$, $\alpha_z'$, $\alpha_z''$, $p_x''$, où $\alpha_b$ est une correction additive pour la distance de ligne de base des deux caméras non de référence (10b, c), mesurée/normalisée par la distance de ligne de base entre la caméra de référence 10a et la deuxième caméra (10b), et $\alpha_f''$, $\alpha_f'$, $\alpha_r''$, $\alpha_x'$, $\alpha_x''$, $\alpha_y'$, $\alpha_y''$, $\alpha_z'$, $\alpha_z''$, $p_x''$ sont les paramètres géométriques, notamment - de gauche à droite - une correction additive des deux corrections additives des distances focales des deux caméras non de référence (10b, c), mesurées/normalisées par la distance focale de la caméra de référence (10a), un écart d'isotropie additive de la troisième caméra (10c), deux angles de correction d'inclinaison pour les deux caméras non de référence, deux angles de correction de panoramique pour les deux caméras non de référence, deux angles de correction de roulis pour les deux caméras non de référence et un décalage du point principal le long de la ligne de base commune de la troisième caméra (10c),

dans lequel l'appareil est configuré pour effectuer la dérivation des matrices d'homographie $H'$ et $H''$ pour les deuxième et troisième caméras à l'aide des valeurs déterminées pour $x_i$ de sorte que l'application des matrices d'homographie

$H'$ et $H''$ aux matrices de projection trigonométriques $P'_{trig} = K' R_{trig}'[1 \mid -C']$ et $P''_{trig} = K'' R_{trig}''[1 \mid -C'']$ avec

$$R'_{trig} = \begin{bmatrix} 1 + \cos\alpha_y' + \cos\alpha_z' & -\sin\alpha_z' & \sin\alpha_y' \\ \sin\alpha_z' & 1 + \cos\alpha_x' + \cos\alpha_z' & -\sin\alpha_x' \\ -\sin\alpha_y' & \sin\alpha_x' & 1 + \cos\alpha_x' + \cos\alpha_y' \end{bmatrix}$$

$$R''_{trig} = \begin{bmatrix} 1 + \cos\alpha_y'' + \cos\alpha_z'' & -\sin\alpha_z'' & \sin\alpha_y'' \\ \sin\alpha_z'' & 1 + \cos\alpha_x'' + \cos\alpha_z'' & -\sin\alpha_x'' \\ -\sin\alpha_y'' & \sin\alpha_x'' & 1 + \cos\alpha_x'' + \cos\alpha_y'' \end{bmatrix},$$

ait pour résultat respectivement

$$H'P'_{trig} = \begin{bmatrix} 1 & 0 & 0 & c'_x \\ 0 & 1 & 0 & 0 \\ 0 & 0 & 1 & 0 \end{bmatrix}, \text{ et} \qquad H''P''_{trig} = \begin{bmatrix} 1 & 0 & 0 & c''_x \\ 0 & 1 & 0 & 0 \\ 0 & 0 & 1 & 0 \end{bmatrix}.$$

2. Appareil selon la revendication 1, dans lequel l'appareil est configuré pour effectuer la formation de $A\bar{x} = \bar{b}$ de sorte que $A$ et $\bar{b}$ soient indépendantes de $\bar{x}$, mais fonction d'un paramètre de ligne de base, et les composantes $x_i$ de $\bar{x}$ se composent des paramètres géométriques et d'une valeur de correction additive pour le paramètre de ligne de base.

3. Appareil selon la revendication 2, dans lequel l'appareil est configuré pour déterminer de manière itérative les valeurs de $x_i$ avec ajustement du paramètre de ligne de base et résolution de $A\bar{x} = \bar{b}$ par itération.

4. Appareil selon la revendication 3, dans lequel l'appareil est configuré pour déterminer de manière itérative les valeurs de $x_i$ jusqu'à ce qu'une amplitude de la valeur de correction additive $\alpha_b$ tombe au-dessous d'un seuil prédéterminé ($\in$).

5. Appareil selon la revendication 4, dans lequel l'appareil est configuré pour régler le paramètre de ligne de base à la première itération de sorte que les deuxième et troisième caméras présentent la même distance de ligne de base par rapport à la première caméra ($\beta_{23}=\beta_{13}$).

6. Appareil selon l'une quelconque des revendications 1 à 5, dans lequel l'appareil est configuré de sorte que

$$C = (0,0,0),$$

$$C' = (c'_x, 0,0),$$

et

$$C'' = (c''_x, 0,0),$$

dans lequel un paramètre de ligne de base est défini en fonction de $c''_x$ et $c'_x$.

7. Appareil selon l'une quelconque des revendications 1 à 6, dans lequel l'appareil est configuré de sorte que le paramètre de ligne de base soit un rapport de ligne de base $\beta_{13} = c''_x/c'_x$.

8. Appareil selon l'une quelconque des revendications 1 à 7, dans lequel l'appareil est configuré de sorte que $R'$ et $R''$ soient linéarisés pour de petits changements de paramètres de rotation des paramètres géométriques.

9. Appareil selon la revendication 8, dans lequel l'appareil est configuré pour effectuer la dérivation des matrices d'homographie $H'$ et $H''$ pour les deuxième et troisième caméras à l'aide des valeurs déterminées pour $x_i$ de sorte que l'application des matrices d'homographie $H'$ et $H''$ aux matrices de projection trigonométriques $P' = K'R_{trig}'[1|-C']$ et $P''= K''R_{trig}''[1|-C'']$, où $R_{trig}'$ et $R_{trig}''$ sont fonction des paramètres de rotation, via des fonctions trigonométriques résulte en des matrices de projection idéales correspondant à un état idéal du réseau de caméras linéaire selon lequel les caméras du réseau de caméras linéaire sont disposées sur l'axe de ligne de base commun et sont co-orientées et présentent les mêmes paramètres intrinsèques.

10. Appareil selon l'une quelconque des revendications 1 à 9, dans lequel l'appareil est configuré pour améliorer de manière itérative les valeurs déterminées pour les composantes $x_i$
en appliquant les matrices d'homographie $H'$ et $H''$ aux positions des points caractéristiques des triplets de points caractéristiques respectivement dans les deuxième et troisième images, de manière à obtenir des positions corrigées; et
en effectuant la formation, la détermination et la dérivation à l'aide des positions corrigées.

**11.** Dispositif selon la revendication 10, dans lequel l'appareil est configuré pour arrêter d'améliorer de manière itérative les valeurs déterminées pour les composantes $x_i$, avant chaque itération,

en reprojetant les triplets de points caractéristiques aux positions corrigées à l'aide des matrices d'homographie $H'$ et $H''$; et

en vérifiant (58) si les rétroprojections des triplets de points caractéristiques aux positions corrigées remplissent un certain critère de convergence.

**12.** Procédé pour déterminer les homographies de rectification pour un réseau de caméras linéaire à disposer le long d'une ligne de base commune (14) et présentant les axes optiques ($18_1$, $18_2$, $18_3$) de trois caméras (10a, 10b, 10c) du réseau de caméras linéaire qui s'étendent parallèlement l'un à l'autre, le procédé comprenant le fait de

fournir (34) des triplets de points caractéristiques (42) dans trois images (32a, 32b, 32c) d'une scène capturée par trois caméras (10a, 10b, 10c) du réseau de caméras linéaire;

utiliser les positions $(u,v)$, $(u',v')$, $(u'',v'')$ des triplets de points caractéristiques (42), former (36), par triplet de points caractéristiques (42), une équation linéaire de type $A\bar{x} = \bar{b}$, où $\bar{x}$ est un vecteur dont les composantes $x_i$ comprennent des paramètres géométriques comportant le panoramique, l'inclinaison et le roulis des caméras non de référence des trois caméras (10a, 10b, 10c) par rapport à une caméra de référence des trois caméras (10a, 10b, 10c), et A est une matrice et $\bar{b}$ est un vecteur, tous deux dépendant des positions $(u,v)$, $(u',v')$, $(u'',v'')$ du triplet du points caractéristiques respectif, de sorte que $A\bar{x} = \bar{b}$ puisse être réécrite comme $\begin{bmatrix} u' \\ v' \\ 1 \end{bmatrix}_\times (u\mathcal{T}_1 + v\mathcal{T}_2 + \mathcal{T}_3) \begin{bmatrix} u'' \\ v'' \\ 1 \end{bmatrix}_\times = 0_{3\times 3}$

où $\mathcal{T}_1$, $\mathcal{T}_2$, $\mathcal{T}_3$ sont des tranches de corrélation d'un tenseur trifocal linéarisé selon une expansion de Taylor autour d'un état parfait du réseau de caméras linéaire parfaitement aligné, où les éléments

$$\mathcal{T}_i^{jk}$$

des tranches de corrélation du tenseur trifocal se rapportent aux matrices de projection $P$, $P' = \left[ a_i^j \right]$,

$P'' = \left[ b_i^j \right]$ qui décrivent les projections respectivement d'une première, d'une deuxième et d'une troisième des trois caméras (10a à 10c), où $P$, $P'$ et $P''$ sont de forme $P = KR[1|\text{-}C]$, $P' = K'R'[1|\text{-}C']$ et $P'' = K''R''[1|\text{-}C'']$, où $K$, $K'$, $K''$ sont des matrices intrinsèques, $R$, $R'$, $R''$ sont des matrices de rotation et $C$, $C'$, $C''$ sont des vecteurs 3D pointant vers les centres (12a à 12c) des trois caméras (10a à 10c), et sont égaux l'un à l'autre dans deux dimensions autres que la ligne de base commune (14), et $K = \begin{bmatrix} f & 0 & 0 \\ 0 & f & 0 \\ 0 & 0 & 1 \end{bmatrix}$ et $R=1$; et déterminer (38) les valeurs pour les composantes $x_i$, qui résolvent $A\bar{x} = \bar{b}$ pour les triplets de points caractéristiques; et

dériver (40) les matrices d'homographie $H'$ et $H''$ pour les deuxième et troisième caméras (10b, 10c) à l'aide des valeurs déterminées pour $x_i$,

dans lequel

$$P' = \begin{bmatrix} \alpha_f' + 1 & -\alpha_z' & \alpha_y' & -c_x'\left(\alpha_f' + 1\right) \\ \alpha_z' & \alpha_f' + 1 & -\alpha_x' & -c_x'\alpha_z' \\ -\alpha_y' & \alpha_x' & 1 & c_x'\alpha_y' \end{bmatrix}$$

avec

$$R' = \begin{bmatrix} 1 & -\alpha'_z & \alpha'_y \\ \alpha'_z & 1 & -\alpha'_x \\ -\alpha'_y & \alpha'_x & 1 \end{bmatrix},$$

$$C' = (c'_x, 0, 0),$$

et

$$K'\left(\alpha'_f\right) = \begin{bmatrix} \left(1 + \alpha'_f\right) & 0 & 0 \\ 0 & \left(1 + \alpha'_f\right) & 0 \\ 0 & 0 & 1 \end{bmatrix},$$

et

$$P'' = \begin{bmatrix} \alpha''_f + \alpha''_r + 1 & -\alpha''_z & \alpha''_y + p''_x & -c''_x\left(\alpha''_f + \alpha''_r + 1\right) \\ \alpha''_z & \alpha''_f + 1 & -\alpha''_x & -c''_x\alpha''_z \\ -\alpha''_y & \alpha''_x & 1 & c''_x\alpha''_y \end{bmatrix}$$

avec

$$R'' = \begin{bmatrix} 1 & -\alpha''_z & \alpha''_y \\ \alpha''_z & 1 & -\alpha''_x \\ -\alpha''_y & \alpha''_x & 1 \end{bmatrix},$$

$$C'' = (c''_x, 0, 0),$$

et

$$K''(\alpha''_f, \alpha''_r, p''_x) = \begin{bmatrix} (1 + \alpha''_f)(1 + \alpha''_r) & 0 & p''_x \\ 0 & (1 + \alpha''_f) & 0 \\ 0 & 0 & 1 \end{bmatrix},$$

de sorte que

$$T_1 = \begin{bmatrix} (1 + \alpha'_f + \alpha''_f + \alpha''_r)\Delta c_x & \alpha''_z\Delta c_x & -\alpha''_y\Delta c_x \\ \alpha'_z\Delta c_x & 0 & 0 \\ -\alpha'_y\Delta c_x & 0 & 0 \end{bmatrix}$$

$$T_2 = \begin{bmatrix} -\alpha''_z c'_x + \alpha'_z c''_x & (1 + \alpha'_f + \alpha''_f)c'_x & \alpha''_x c'_x \\ -(1 + \alpha'_f + \alpha''_f + \alpha''_r)c''_x & \alpha'_z c'_x - \alpha''_z c''_x & \alpha''_y c''_x \\ -\alpha'_x c''_x & -\alpha'_y c'_x & 0 \end{bmatrix}$$

$$\mathcal{T}_3 = \begin{bmatrix} (\alpha''_y + p''_x)c'_x - \alpha'_y c''_x & -\alpha''_x c'_x & (1+\alpha'_f)c'_x \\ \alpha'_x c''_x & 0 & \alpha'_z c'_x \\ -(1+\alpha''_f+\alpha''_r)c''_x & -\alpha''_z c''_x & -\alpha'_y c'_x + \alpha''_y c''_x \end{bmatrix},$$

un paramètre de ligne de base est défini en fonction de $c''_x$ et $c'_x$,

la première caméra est la caméra de référence et les deuxième et troisième caméras sont les deux caméras non de référence,

les composantes $x_i$ de $\bar{x}$ son $\alpha_b$, $\alpha''_f$, $\alpha'_f$, $\alpha''_r$, $\alpha'_x$, $\alpha''_x$, $\alpha'_y$, $\alpha''_y$, $\alpha'_z$, $\alpha''_z$, $p''_x$, où $\alpha_b$ est une correction additive pour la distance de ligne de base des deux caméras non de référence (10b, c), mesurée/normalisée par la distance de ligne de base entre la caméra de référence 10a et la deuxième caméra (10b), et $\alpha''_f$, $\alpha'_f$, $\alpha''_r$, $\alpha'_x$, $\alpha''_x$, $\alpha'_y$, $\alpha''_y$, $\alpha'_z$, $\alpha''_z$, $p''_x$ sont les paramètres géométriques, notamment - de gauche à droite - une correction additive des deux corrections additives des longueurs focales des deux caméras non de référence (10b, c), mesurées/normalisées par la longueur focale de la caméra de référence (10a), un écart d'isotropie additive de la troisième caméra (10c), deux angles de correction d'inclinaison pour les deux caméras non de référence, deux angles de correction de panoramique pour les deux caméras non de référence, deux angles de correction de roulis pour les deux caméras non de référence et un décalage du point principal le long de la ligne de base commune de la troisième caméra (10c),

dans lequel la dérivation des matrices d'homographie H' et H" pour les deuxième et troisième caméras à l'aide des valeurs déterminées pour $x_i$ est effectuée de sorte que l'application des matrices d'homographie H' et H" aux matrices de projection trigonométriques $P'_{trig} = K' R_{trig}' [1 | -C']$ et $P''_{trig} = K'' R_{trig}'' [1 | -C'']$ avec

$$R'_{trig} = \begin{bmatrix} 1+\cos\alpha'_y+\cos\alpha'_z & -\sin\alpha'_z & \sin\alpha'_y \\ \sin\alpha'_z & 1+\cos\alpha'_x+\cos\alpha'_z & -\sin\alpha'_x \\ -\sin\alpha'_y & \sin\alpha'_x & 1+\cos\alpha'_x+\cos\alpha'_y \end{bmatrix},$$

$$R''_{trig} = \begin{bmatrix} 1+\cos\alpha''_y+\cos\alpha''_z & -\sin\alpha''_z & \sin\alpha''_y \\ \sin\alpha''_z & 1+\cos\alpha''_x+\cos\alpha''_z & -\sin\alpha''_x \\ -\sin\alpha''_y & \sin\alpha''_x & 1+\cos\alpha''_x+\cos\alpha''_y \end{bmatrix},$$

ait pour résultat respectivement

$$H'P'_{trig} = \begin{bmatrix} 1 & 0 & 0 & c'_x \\ 0 & 1 & 0 & 0 \\ 0 & 0 & 1 & 0 \end{bmatrix}, \text{ et } \quad H''P''_{trig} = \begin{bmatrix} 1 & 0 & 0 & c''_x \\ 0 & 1 & 0 & 0 \\ 0 & 0 & 1 & 0 \end{bmatrix}.$$

**13.** Programme d'ordinateur présentant un code de programme pour réaliser, lorsqu'il est exécuté sur un ordinateur, un procédé selon la revendication 12.

FIGURE 1

from 10a     from 10b     from 10c

32a     32b     32c        <u>30</u>

| Feature point triplet provider | ~34 |

42

(u,v)     (u',v')     (u",v")

| Equation former | ~36 |

$A\vec{x} = \vec{b}$

| Equation solver | ~38 |

$\vec{x}$

| Homography matrix derivator | ~40 |

H', H"

| Convergence criterion checker | ~56 |

## FIGURE 2

FIGURE 3

FIGURE 4

FIGURE 5

FIGURE 6

**EP 2 917 895 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5821943 A

**Non-patent literature cited in the description**

- **L. AN ; Y. JIA ; J. WANG ; X. ZHANG ; M. LI.** An efficient rectification method for trinocular stereovision. *ICPR '04,* 2004, vol. 4, 56-59
- **N. AYACHE ; C. HANSEN.** Rectification of images for binocular and trinocular stereovision. *ICPR '88,* November 1988, vol. 1, 11-16
- **Y. K. BAIK ; J. H. CHOI ; K. M. LEE.** An Efficient Trinocular Rectification Method for Stereo Vision. *Proc. Frontiers of Computer Vision (FCV),* January 2007
- **F. BOUTAREL ; V. NOZICK.** Epipolar rectification for autostereoscopic camera setup. *EAM Mechatronics 2010,* November 2010, 133-136
- **DU XIN ; LI HONGDONG.** A Simple Rectification Method for Linear Multi-base line Stereovision System. *Journal of Zhejiang University (Science),* 2004, vol. 5 (5), 567-571
- **R. HARTLEY ; A. ZISSERMAN.** Multiple View Geometry in Computer Vision. Cambridge University Press, 2000
- **W. HE ; W. GUOZHONG ; L. LILIANG ; Z. YANG ; A. PING ; Z. ZHAOYANG.** Fast automatic elimination of vertical parallax of multiview images. *Signal Processing (ICSP),* 2010, 1004-1007
- **M. HEINRICHS ; V. RODEHORST.** Trinocular Rectification For Various Camera Setups. *Symp. of ISPRS, Comm. III, PCV'06,* 2006, 43-48
- **Y. KANG ; C. LEE ; Y. HO ; IN 3DTV08 ; 2008.** *An efficient rectification algorithm for multi-view images in parallel camera array,* 61-64
- **F. KANGNI ; R. LAGANIERE.** Projective Rectification of Image Triplets from the Fundamental Matrix. *ICASSP 2006,* 14 May 2006, vol. 2, II

- **J. MALLON ; P. F. WHELAN.** Projective rectification from the fundamental matrix. *Image Vision Comput.,* July 2005, vol. 23, 643-650
- **V. NOZICK.** Multiple view image rectification. *Access Spaces (ISAS) 2011, 1st Intern. Symp,* 17 June 2011, 277-282
- **M. OKUTOMI ; T. KANADE.** A Multiple-Base line Stereo. *IEEE Trans. on Pattern Analysis and Machine Intelligence (PAMI),* 1993, vol. 1 5 (4
- **A. SHASHUA.** Algebraic functions for recognition. *IEEE Trans. on Pattern Analysis and Machine Intelligence (PAMI),* August 1995, vol. 17 (8), 779-789
- **C. SUN.** Uncalibrated three-view image rectification. *Image and Vision Computing,* 01 March 2003, vol. 21 (3), 259-269
- **Z. YANG ; A. PING ; W. HE ; Z. ZHAOYANG.** A rectification algorithm for un-calibrated multi-view images based on SIFT features. *ICALIP2010,* 23 November 2010, 143-147
- **H. ZHANG ; J. CECH ; R. SARA ; F. WU ; Z. HU.** A Linear Trinocular Rectification Method for Accurate Stereoscopic Matching. *BMVC 2003,* September 2003, 29.1-10
- **F. ZILLY ; M. MÜLLER ; P. EISERT ; P. KAUFF.** Joint Estimation of Epipolar Geometry and Rectification Parameters using Point Correspondences for Stereoscopic TV Sequences. *3DPVT 2010,* May 2010
- **F. ZILLY ; C. RIECHERT ; P. EISERT ; P. KAUFF.** Semantic Kernels Binarized - A Feature Descriptor for Fast and Robust Matching. *8th Conf. on Visual Media Production (CVMP 2011),* November 2011